(19)

Europäisches
Patentamt

European
Patent Office

Office européen
des brevets

(11)  **EP 2 687 284 A1**

(12)  # EUROPEAN PATENT APPLICATION

(43) Date of publication:
**22.01.2014  Bulletin 2014/04**

(51) Int Cl.:
**B01D 53/94** *(2006.01)*

(21) Application number: **13174350.2**

(22) Date of filing: **02.06.2010**

| | |
|---|---|
| (84) Designated Contracting States:<br>**AL AT BE BG CH CY CZ DE DK EE ES FI FR GB<br>GR HR HU IE IS IT LI LT LU LV MC MK MT NL NO<br>PL PT RO SE SI SK SM TR** | (71) Applicant: **BASF SE**<br>**67056 Ludwigshafen (DE)** |
| (30) Priority: **08.06.2009  US 184846 P** | (72) Inventors:<br>• **Bull, Ivor**<br>**Hopewell Junction, NY 12533 (US)**<br>• **Müller, Ulrich**<br>**67435 Neustadt (DE)** |
| (62) Document number(s) of the earlier application(s) in<br>accordance with Art. 76 EPC:<br>**10164682.6 / 2 269 733** | |
| | Remarks:<br>This application was filed on 28-08-2013 as a<br>divisional application to the application mentioned<br>under INID code 62. |
| (27) Previously filed application:<br>**02.06.2010 EP 10164682** | |

(54)  **Cu containing silicoaluminophosphate (Cu-SAPO-34)**

(57)    The present invention relates to a process for the preparation of pure silicoaluminophosphate (SAPO-34) and which contains Cu wherein said molecular sieve material is obtained in a single process stage. This process stage is a hydrothermal crystallization stage to which an aqueous solution is subjected which, apart from source of silica, alumina and phosphorous usually employed framework elements of the zeolite framework, already contains all the Cu necessary for the preparation of the final Cu containing silicoaluminophosphate (SAPO34). In addition, the present invention relates to a pure copper containing molecular sieve material as such, having framework structure SAPO-34, having a molar composition according to formula: $CU_{0.007-0.125}Si_{0.01-0.25}Al_{0.44-0.54}P_{0.25-0.49}O_2$, having an amount of impurity phase of less than 25 % and having a BET surface area of at least 400 m$^2$/g.

EP 2 687 284 A1

**Description**

The present invention relates to a process for the preparation of pure silicoaluminophosphate (SAPO-34) and which contains Cu wherein said molecular sieve material is obtained in a single process stage. This process stage is a hydrothermal crystallization stage to which an aqueous solution is subjected which, apart from source of silica, alumina and phosphorous usually employed framework elements of the zeolite framework, already contains all the Cu necessary for the preparation of the final Cu containing silicoaluminophosphate (SAPO34). In addition, the present invention relates to a pure copper containing molecular sieve material as such, having framework structure SAPO-34, having a molar composition according to formula: $Cu_{0.007-0.125}Si_{0.01-0.25}Al_{0.44-0.54}P_{0.25-0.49}O_2$, having an amount of impurity phase of less than 25 % and having a BET surface area of at least 400 $m^2$/g.

Silicon-substituted aluminophosphates, which are both crystalline and microporous and exhibit properties characteristic of both aluminosilicte zeolites and aluminophosphates, are known in the art and disclosed for example in US 4,440,871. Silicoaluminophophates (SAPOs) are synthetic materials having a three-dimensional mircoporous aluminophosphate crystalline framework with silicon incorporated therein. The framework structure consists of $PO_2^+$, $AlO_2^-$, and $SiO_2$ tetrahedral units.

In order to facilitate reference to aluminophosphate-containing crystalline compositions, shorthand references have been extensively used in the art. The term "$AlPO_4$" is typically used for aluminophosphate compositions. The term "SAPO" is typically used for silicoaluminophosphates. The term "MeAPO" is typically used for metal aluminophosphates. The term "MeAPSO" is typically used for metal silicoaluminophosphates. In the case of "MeAPO" and "MeAPSO" the framework contains in addition to $AlO_2^-$ and $PO_2^+$ and as the case may be in addition to $SiO_2$ one or more tetrahedrally connected framework oxide units $MeO_2^n$ where n is -3, -2, -1, 0 or +1 and Me is a metal.

There are a wide variety of SAPO molecular sieves known in the art. Of these, the more important examples include SAPO-5, SAPO-11, SAPO-18, SAPO-34, SAPO-35, SAPO-41, and SAPO-56.

SAPO exhibits the cation exchange property by the isomorphorous substitution of P in AlPO by Si. This property allows for the introduction of active species suitable for catalytic applications. Typically these active species are metal cations or oxycations which are introduced via ion-exchange or impregnation. Therefore, SAPO has a great possibility for a promising catalyst. However, these advantages in introducing active species of SAPO have not been thoroughly utilized in commercial applications.

It has been recognized for some time that SAPO molecular sieves are relatively difficult to manufacture. SAPO synthesis procedures are particularly sensitive to small variations in the composition of the reaction mixture and the conditions used. The problems associated with the synthesis of these molecular sieves are exacerbated by the generally low yields of crystalline material obtained from the synthesis process. Additionally, centrifugation is the reported method for solid separation following crystallization due to issues associated with filterability. These difficulties contribute to the relatively high cost of SAPO molecular sieves.

There have been varying attempts in the art to improve the yield of SAPO molecular sieves. U.S. Pat. No. 5,296,208 describes a process for the synthesis of crystalline molecular sieve materials including SAPO and ALPO molecular sieves. The process described therein requires the removal of at least some of the nitrogencontaining organic templating agent from the reaction mixture during the crystallization process. This removal has the effect of increasing the final yield of crystalline molecular sieve.

WO 01/25151 describes a process for the synthesis of SAPO molecular sieves in which the pH of the synthesis mixture is adjusted during the synthesis. The control of pH in this process results in an improved yield of SAPO molecular sieve.

A further difficulty encountered with SAPO molecular sieves is their relative instability in the synthesis mixture once the crystallization reaction is completed. If these materials remain in the synthesis solution for any period of time after the reaction is completed they are prone to dissolution back into the reaction mixture. This effect further reduces the yield of these molecular sieves. This is an important problem in the preparation of SAPO molecular sieves as it is often necessary to retain the crystallized molecular sieve within the reaction mixture as a slurry after completion of the crystallization for extended periods of time prior to transfer

Dumitriu et al. disclose in Mircoporous Materials 10 (1997) 1 - 12 a detailed study on the synthesis, characterization and catalytic activity of SAPO-34 obtained with piperidine as templating agent. The influence of the gel composition, the effect of dilution, the influence of the time and the temperature of crystallization were studied. It was found that SAPO-34 and SAPO-20 are competing phases at high piperidine concentrations. Additionally, SAPO-20 is favored at pH>7.5 with crystallization times of 215 h at 200 °C. Highly crystalline and pure SAPO-34 was obtained by heating the gel composition $1Al_2O_3/0.6P_2O_5/1.1$ piperidine/$0.8\ SiO_2/100H_2O$ at 200°C for at least 2 days. It is disclosed that these materials exhibit interesting catalytic performances in aldol condensation.

In addition, Dumitriu et al. disclose in Journal de la Societe Algerienne de Chimie 9 (1999) 215 - 225 that the Si content seems to influence the process of SAPO-34. Si amounts smaller than 0.8 mole per mole alumina gave rise to more SAPO-20, whereas only traces of SAPO-20 were obtained when the Si content is raised up to 0.9 mole per mole of alumina. It is concluded that a pure product can only be obtained in a very narrow optimal conditions. The temperature and the framework elements composition of the gel seem to be more important parameters which influence the process than the time of crystallization and dilution of the gel.

Ciobanu et al Chimie 5 (1997) 179-184 disclose a morpholine templated synthesis and characterization of SAPO-34. Additionally, a second template, methylene blue, results in materials with different crystal size and improved purity of SAPO-34. It is stated that at crystallization time shorter than 48 h, only an amorphous phase was detected. After 2 days, pure SAPO-34 was obtained and the size of the crystals increase with synthesis time.

If metal containing SAPO molecular sieves are desired, the additional metal ion-exchange step that will be needed to form Me-SAPO exhibits four sub-steps i) synthesis of the template containing form of the molecular sieve material, ii) calcination, removing the template (SDA) thus forming the H form, iii) transformation to the NH4-form, and, finally iv) transformation to the $Me^{z+}$ form. Thus, the complex ion-exchange step causes an additional decrease in yield of SAPO-34.

SAPOs have been used as adsorbents and catalysts. As catalysts, SAPOs have been used in processes such as fluid catalytic cracking, hydrocracking, isomerization, oligomerization, the conversion of alcohols or ethers, and the alkylation of aromatics.

The use of Cu-SAPO-34 in reducing contaminants in exhaust gases is disclosed (see for example US 2008/0241060, WO 2008/132452 and Kagaku et al. Japan Scientific Societies Press, No. 41, 1999). Such methods include the selective catalytic reduction ("SCR") of exhaust gases contaminated with nitrogen oxides (for example $NO_x$).

US 2008/0241060 and WO 2008/132452 disclosed that SAPO-34 material can be doped with iron and/or copper, whereas iron and/or copper are introduced into the mircoporous crystalline material by liquid-phase or solid ion-exchange or incorporated by a direct-synthesis, whereas a direct-synthesis does not require a metal doping process after the zeolite has been formed. Unfortunately, no details are disclosed regarding this direct-synthesis. The examples of US 2008/0241060 and WO 2008/132452 were conducted with Cu ion-exchanged SAPO-34.

Kagaku et al. report in the Japan Scientific Societies Press, No. 41, 1999 a comparison of Cu-SAPO-34 and Cu-ZSM-5. SAPO was obtained by hydrothermal synthesis. Cu ion exchange was performed using a copper acetate aqueous solution to achieve a loading amount of 3 wt%. The conversion rate to $N_2$ of Cu-SAPO-34 was higher than that of Cu-ZSM-5. In particular, Cu-SAPO-34 exhibited a substantially equal conversion rate in the temperature range of 400 to 600°C. Cu-SAPO-34 was found to be superior in consideration of the fact that a useful catalyst is required to be active in reaction over a wide temperature range. The high activity of Cu-SAPO-34 does not deteriorate after several hundred hours of reaction.

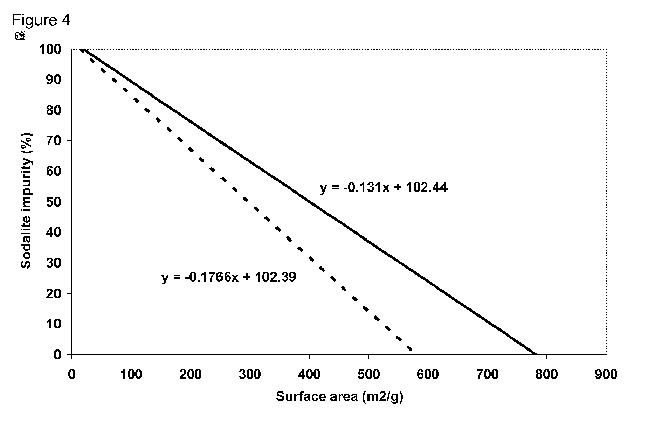

Ishihara et al. disclose in Studies in Surface Science and Catalysis, Vol. 84, 1994, p 1493 and in Journal of Catalysis 169, 93-102 (1997) a Cu-SAPO-34, prepared by ion exchanged, described as a thermostable catalyst for selective reduction of $NO_x$ with hydrocarbons like $C_3H_6$. In spite of the promising catalytic results the stability of the Cu-ion exchanged SAPO-34 when aged at high temperature disclosed by Ishihara et al. is not sufficient for commercial applications. Figure 4a of the later reference, indicates that when aged at 800 °C in the presence of 3% steam that there is a significant deactivation of the material, where the catalyst loses 75% of its activity at the reaction temperature of -300 °C when compared to the material aged at 500 °C.

Dedecek et al. disclose in Collect. Czech. Chem. Commun. Vol 65 (2000), p 343 that Cu ion exchanged ZnAlPO-34 molecular sieves exhibit high and stable catalytic activity in NO decomposition, while Cu ions exchanged to chabazite are inactive.

Metal-promoted zeolite catalysts including, among others, iron-promoted and copper-promoted zeolite catalysts, for the selective catalytic reduction of nitrogen oxides with ammonia are known. Iron-promoted zeolite beta (US 4961917) has been an effective commercial catalyst for the selective reduction of nitrogen oxides with ammonia. Unfortunately, it has been found that under harsh hydrothermal conditions, such as reduction of NOx from gas exhaust at temperatures exceeding 500 °C, the activity of many metal-promoted zeolites begins to decline. This decline is often attributed to destabilization of the zeolite through dealumination and the consequent loss of metal-containing active centers within the zeolite. To maintain the overall activity of NOx, increased levels of iron-promoted zeolite catalyst must be provided. As the levels of the zeolite catalyst are increased to provide adequate NOx removal, there is an obvious reduction in the cost efficiency of the process for NOx removal as the cost of the catalyst rise.

Furthermore there is a desire to provide catalysts with improved low temperature SCR activity and/or improved hydrothermal durability over existing zeolites or other molecular sieve materials, for example, catalyst materials which are stable at temperatures up to at least 650 °C and higher. Therefore, application of zeolite or other molecular sieve based catalysts to automobiles and turbine engines requires significant improvement in hydrothermal stability with regard to maintaining high NOx conversion over a wide range of temperature (-200 to 600 °C).

Beside the multi-step synthesis of metal containing SAPOs, direct synthesis of the related MeAPSOs are reported.

The early literature describes a MeAPSO as containing metals, such as Cu, Fe, Co, and Mn, as part of the tetrahedral framework sites of the molecular sieve (see for example US 4,861,743). The approach involves adding metal sources to the synthesis gel already containing reagents needed to prepare SAPO-34. Recent literature studies have indicated that the additional metal not only resides in framework positions but, extraframework cationic and oxidic aggregates are present (see Palella et al. Journal of Catalysis 217 (2003) 100-106, Frache et al. Stud. Surf. Sci. Catal. 135 (2001) 328 and Frache et al. Stud. Surf. Sci. Catal. 140 (2001) 269).

Frache et al. make comparisons of one-pot CuAPSO-34 to a number of materials including multistep (ion-exchanged) versions of Cu ZSM-5 and Cu SAPO-34 and one-pot CuALPO-34. Frache et al. disclose in Catalysis Today 75 (2002) 359-365 the catalytic DeNO$_x$ activity of cobalt and copper ions in MeAPSO-34. CuAPSO-34 was prepared via one-pot synthesis, whereas the crystallization was conducted at 190°C for 7 to 10 days. They report that CuSAPO-34 has a higher number of accessible Cu$^+$ centers when compared to CuAlPO-34 through CO FTIR studies suggesting that Si incorporation has led to Cu located in ion-exchange sites (Catalysis Today, 75, 2002, 359-365). The suggested presence of cationic Cu species (Cu$^{2+}$/Cu$^+$) is strengthened by the existence of similar FTIR band to ion-exchanged Cu-ZSM-5 when studied in the presence of NO.

[0025] Frache et al. disclose in Topics in Catalysis Vol. 22, Nos. 1/2, Jan. 2003 a study of Cu-APSO-34, Cu-SAPO-34 and Cu-ZSM-5 for N$_2$O decomposition. CuAPSO-34 was prepared via one-pot synthesis, whereas the crystallization was conducted at 190°C for 7 to 10 days. Cu-SAPO-34 was prepared by means of conventional ion exchange method using copper acetate. It is reported that the SAPO-34 undergoes an extensive crystallinity loss upon copper ion exchange. In more detailed discussion it is stated that the XRD of the multistep shows sensitivity to hydration / dehydration at low temperatures where this instability is also reflected in the low surface area of the material after ion-exchange. The resulting BET of the fresh Cu-SAPO-34 is 21 m$^2$/g. Due to the lack of stability, no XRD and catalytic experiments after treatments in H$_2$O vapor at 600°C were performed. On the contrary CuAPSO-34 framework showed good hydrothermal stability. This paper does suggest potential stability advantages of one-pot versus multistep, but it is clear that the fresh product prepared by multistep is already a very poor material with little explanation to the source of these inferior properties (BET, crystallinity). Multistep CuSAPO-34 has been successfully prepared by others with improved properties and catalysis (see for example US 2008/0241060 and WO 2008/132452). Additionally, it should be highlighted that this literature teaches how to make a one-pot material with a low BET surface area of 346 m$^2$/g. No clear discussion of impurity phases was provided but, this material property infers high impurity levels possibly indicated in their SEM images and xrd patterns. On the contary, the present invention indicates that surface area and impurity levels are essential features of a high performance SCR of NOx catalyst.

Frache et al. disclose in Studies in Surface Science and Catalysis, 140 (2001), 269 ff. the synthesis of CuAPSO-34 and studies of NO reactivity. CuAPSO-34 was prepared via one-pot synthesis, whereas the crystallization was conducted at 190°C for 7 to 10 days.

Palella et al. disclose in Journal of Catalysis 217 (2003) 100-106 a comparison of CuAPSO-34 to CuZSM-5 in view on hydrothermal stability for N$_2$O decomposition. A gel solution with a molar composition 0.08 CuO:0.2 SiO$_2$:0.46 Al$_2$O$_3$:0.45 P$_2$O$_5$:1.25 Morpholine:50 H$_2$O was crystallized under autogenous pressure at 190°C for 7 to 10 days. The obtained BET for fresh CuAPSO-34 was 346 m$^2$/g, whereas the BET obtained for aged CuAPSO-34 was 198 m$^2$/g. It is revealed that fresh CuAPSO-34 is less active than fresh ZSM-5, but after the second aging cycle the conversion rate of ZSM-5 decreased to 2 % of its fresh performance whereas aged CuAPSO-34 showed 39 % of its fresh performance at the same temperature. This paper studies the CuAPSO-34 material presented previously in Topics in Catalysis Vol. 22, Nos. 1/2, Jan. 2003.

Wang et al. disclose in the Chinese Journal "Journal of propulsion technology", Dec. 2001, Vol 22, No. 6, pp. 510-513 a direct method of preparing CuAPSO-34. It is reported that a Cu source was added to the starting material. The crystallization temperature was 180°C, the crystallization time was 120 h. Cu content of the gel composition was reported as 0.21 Cu : Al$_2$O$_3$ and the resulting product was reported to have Cu in framework positions and was reported to accumulate at the pore-opening and outer surface. This later observation may indicate the presence of undesired copper oxide species. Furthermore it is stated that the resulting product is less stable when compared to SAPO-34. It is disclosed that these materials are promising to be used as catalysts for the catalytic cracking of endothermic fuels.

Wei et al. disclose in Catalysis Today 131 (2008) 262-269 and in Microporous and Mesoporous Materials 90 (2006) 188-197, the synthesis, characterization and catalytic performance of metal-incorporated SAPO-34 for chloromethane transformation to light olefins. MeAPSO-34 (Me = Co, Mn, Fe) was prepared by a direct method via a crystallization temperature of 200°C and a crystallization time of 15 h/24 h. Co, Mn, and Fe-impregnated SAPO-34 were prepared by impregnation method. Where APSO-34 was prepared through the introduction of the desired metal during hydrothermal synthesis and SAPO-34 has the metal introduced following the crystallization. It was noted that coexistence of metal species in the gel suppressed Si incorporation into the framework and hence product leading to a low yield. In all cases, the stoichiometry of the product varied significantly from the gel with low usage of silica and phosphorous (gel composition was 1 Al$_2$O$_3$: 1 P$_2$O$_5$ : 0.8 SiO$_2$ : 0.05 Me, product composition was 1 Al$_2$O$_3$: 0.86-0.9 P$_2$O$_5$: 0.39-0.42 SiO$_2$ : 0.06-0.09 Me).

Ashtekar et al. disclose in J. Phys. Chem. 1996, 100, 3665-3670 and in J. Chem. Soc. Faraday Trans., 1996, 92(13), 2481-2486 the incorporation of Manganese and Magnesia in the SAPO and APO structure. The crystallization of MnAPSO-34 and MgAPSO-34 is carried out 200 °C for 48 hours. For both materials no peak was observed between 340 and 380 °C in the NH$_3$ TPD profile which is present in the present invention.

Xu et al. disclose in Studies in Surface Science and Catalysis, 147 (2004), 445 ff. the synthesis, characterization and MTO performance of MeAPSO-34. Among many MeAPSO-34s, CuAPSO-34 having a molar composition of the following formula is disclosed $(Al_{0.491}Si_{0.067}P_{0.427}Cu_{0.015})O_2$. No indication of reaction temperature and time is given. The gel composition significantly differs from the product composition indicating the lack of control in targeting a specific catalytic composition (gel: 0.2 SiO$_2$ : Al$_2$O$_3$: P$_2$O$_5$: 0.05 Cu. Product: 0.272 SiO$_2$: 1 Al$_2$O$_3$:0.869 P$_2$O$_5$ : 0.064Cu). Temperature programmed desorption profiles for CuAPSO-34 is reported indicating peaks at 475 K, 676 K, and 731 K (202, 403, and 458 °C respectively). This material lacks the additional peak at 340 to 380 °C present in the material of the present invention which is indicative of Cu in exchange positions.

US 6,495,724 disclose a Zirconia-modified SAPO-34 useful for producing methyl-amines. Tetraethylammonium hydroxide was used as the templating agent with crystallization at 200 °C for 4 hours. High crystallinity was reported with no details of yield, and other physical characteristics (BET of full chemical composition).

EP 1,142,833 disclose a fast preparation of MeAPSO-34. A gel solution with a molar composition 0.05 CuO: 0.4 SiO$_2$ : Al$_2$O$_3$: P$_2$O$_5$ : 3 triethylamine : 39 H$_2$O is first prepared. It is disclosed that the gel mixture is radiated in a microwave before the mixture is crystallized for about 2 hours under temperature programmed 50-200°C.

State of the art CuAPSO-34 syntheses are complicated by the presence of impurity phases and the resulting impact on material properties. In particular, the amount, location and speciation of the Cu introduced. Preparation of Cu-SAPO-34 materials by the multistep process allows careful control of phase purity and then necessary adjustments to exchange conditions targeting desired Cu loadings even in the presence of dense impurities. Whereas, impurity phases have direct consequences on Cu loading, location and speciation in the product obtained through direct hydrothermal synthesis. These issues hinder the compositional control that you have through transferring the stoichiometry of the starting gel to the product meaning that targeted copper will not be achieved in the product. Control of Cu loading is vital since this an active part of the molecular sieve catalyst. The present invention describes process conditions needed to provide high purity CuAPSO-34 suitable for high performance catalysis. Advantages of this will be demonstrated when applied to selective reduction of NOx with ammonia.

Although many studies have been conducted, no SCR-catalyst based on SAPO-34 is commercially available yet. The limiting parameter of marketing might be the difficulties in manufacturing proper SAPO molecular sieve material. As these Me-SAPO / MeAPSO materials are of high economical and ecological interest, there is an on-going increasing demand for efficient processes for the preparation of these materials.

Therefore, it is an object of the present invention to provide a novel time- and cost-saving process for the preparation of a Cu containing SAPO-34 exhibiting high yield and high purity of that material. The high yield also represents advantages in wastewater management beneficial for the environment.

It is a further object of the present invention to provide a novel and efficient process for the preparation of Cu containing SAPO-34, wherein said molecular sieve material is obtained in a single process stage.

It is a further object of the present invention to provide a novel process for the preparation of a Cu containing SAPO-34 exhibiting a minimal amount of impurity phases.

An additional object of the present invention is to provide a high yield synthesis. Thus, the product can be more efficiently recovered through filtration since excess phosphate has been found to have a negative impact on filtration by its agglomerative chemistry. Many examples note retrieval by centrifugation to avoid these issues.

It is a further object of the present invention to provide a novel Cu containing SAPO-34 exhibiting a high SCR performance. That SCR performance is preferably comparable, even more preferred better than the SCR performance of Cu-SAPO-34 obtained via a multi-step process.

Therefore, the present invention relates to a process for the preparation of a copper containing SAPO-34 having a molar gel composition according to formula:

$$a\ SiO_2 : 1\ Al_2O_3: b\ P_2O_5: c\ CuO: d\ H_2O: e\ SDA$$

wherein a is in the range from 0.05 to 0.65;
wherein b is in the range from 0.4 to 1;
wherein c is in the range from 0.03 to 0.5;
wherein d is in the range from 0 to 200;
wherein e is in the range from 1 to 10
the process comprising

(i) preparation of an aqueous solution containing at least one silicon source, at least one aluminum source, at least one phosphorous source, at least one copper source and at least one structure directing agent (SDA) suitable for the preparation of SAPO-34;

(ii) hydrothermal crystallization of the aqueous solution according to (i), obtaining a suspension containing the copper containing SAPO-34.

According to stage (i) of the present invention, all conceivable silicon, aluminum, phosphorous and copper sources may be employed which can build up the molecular sieve framework.

The term molecular sieve material will be used to generally describe all non-zeolitic compositions, meaning any microporous material that is not exclusively an aluminosilicate or silicate tetrahedral framework (i.e. elements other than only Al and Si or Si). SAPO fits this description.

Generally, all suitable sources for $SiO_2$ can be employed. By way of example, silicates, silica, silicic acid, colloidal silica, fumed silica, tetraalkoxysilanes, silica hydroxides, precipitated silica or clays may be mentioned. In this context, both so-called "wet-process silicon dioxide" as well as so called "dry-process silicon dioxide" can be employed. Colloidal silicon dioxide is, inter alia, commercially available as Ludox®, Syton®, Nalco®, or Snowtex®. "Wet process" silicon dioxide is, inter alia, commercially available as Hi-Sil®, Ultrasil®, Vulcasil®, Santocel®, Valron-Estersil®, Tokusil® or Nipsil®. "Dry process" silicon dioxide is commercially available, inter alia, as Aerosil®, Reolosil®, Cab-O-Sil®, Fransil® or ArcSilica®. Tetraalkoxysilanes, such as, for example, tetraethoxysilane or tetrapropoxysilane, may be mentioned. The use of a mixture of two or more suitable sources for $SiO_2$ may be mentioned.

According to preferred embodiments of the present invention, dry-process silica or colloidal silica is employed. If colloidal silica is employed, it is further preferred that said colloidal silica is stabilized without alkali metal, in particular without sodium. According to even more preferred embodiments where colloidal silica is used, the colloidal silica employed as aqueous solution in (i) is stabilized with ammonia.

Therefore, the present invention relates to above-described process wherein the source for $SiO_2$ is substantially free of alkali metal, in particular free of sodium.

Generally, all suitable sources for $Al_2O_3$ can be employed. By way of example, metallic aluminum such as aluminum powder, suitable aluminates such as alkali metal aluminates, alumina monohydrates, aluminum alcoholates such as aluminum triisopropylate and aluminum hydroxide may be mentioned. According to a preferred embodiment of the present invention, however, an $Al_2O_3$ source is employed which is free of alkali metal, in particular free of sodium. Aluminum hydroxide, $Al(OH)_3$, and aluminumtriisopropylate are especially preferred. The use of a mixture of two or more suitable sources for $Al_2O_3$ may be mentioned.

Again, the present invention relates to above-described process wherein the preferred source for $Al_2O_3$ is substantially free of alkali metal, in particular free of sodium.

Generally, all suitable sources for $P_2O_5$ can be employed. By way of example, phosphoric acid and ammonium phosphate may be mentioned. According to a preferred embodiment of the present invention, however, a $P_2O_5$ source is employed which is free of alkali metal, in particular free of sodium. Phosphoric acid is especially preferred. The use of a mixture of two or more suitable sources for $P_2O_5$ may be mentioned.

Generally, all suitable sources for Cu can be employed. By way of example, copper (II) oxide, copper acetate, copper nitrate, copper chloride, copper fluoride, copper sulfate, copper carbonate, copper tetraamine, and copper oxalate may be mentioned. Preferably, an aqueous solution of at least one Cu salt or oxide is employed. Preferred are copper oxide and Cu salts are, e.g., copper acetate, copper fluoride and copper chloride and copper tetraamine. The use of a mixture of two or more suitable sources for Cu may be mentioned.

Even more preferably, an aqueous solution of at least one suitable Cu salt is employed which, apart from water and the Cu salt, contains ammonia. According to a preferred embodiment, the amount of ammonia contained in this aqueous solution is high enough so that the Cu which is contained in the aqueous solution is present as $[Cu(NH_3)_4]^{2+}$ complex.

According to a preferred embodiment of the present invention, however, a Cu source is employed which is free of alkali metals, in particular free of sodium.

Generally, the sources for $SiO_2$, $Al_2O_3$, $P_2O_5$, Cu, water and structure directing agent (SDA) can be employed in all conceivable amounts and molar ratios for the preparation of the aqueous solution in (i) with the proviso that a gel composition according to formula:

$$a\ SiO_2 : 1\ Al_2O_3 : b\ P_2O_5 : c\ CuO : d\ H_2O : e\ SDA$$

wherein a is in the range from 0.05 to 0.65, more preferably in the range from 0.1 to 0.4, more preferably in the range from 0.1 to 0.25;
wherein b is in the range from 0.4 to 1, more preferably in the range from 0.7 to 1, more preferably in the range from 0.8 to 0.95;
wherein c is in the range from 0.03 to 0.5, more preferably in the range from 0.06 to 0.28, more preferably in the range from 0.06 to 0.13;
wherein d is in the range from 0 to 200, more preferably in the range from 0 to 100, more preferably in the range from 0 to 50;

wherein e is in the range from 1 to 10, more preferably in the range from 1 to 4, more preferably in the range from 2 to 3; is obtained.

Preferably (a+2b) is 2. Thus, the gel composition preferably closely correlates with the target stoichiometry of the product.

Preferably with the additional proviso that in (ii), a Cu containing SAPO-34 having a molar composition according to formula:

$$Cu_{0.007-0.125}Si_{0.01-0.25}Al_{0.44-0.54}P_{0.25-0.49}O_2$$

is obtained.

According to a preferred embodiment of the present invention, the calcined molecular sieve material, obtainable or obtained by the process of the present invention, or the Cu containing molecular sieve material as such, having a molar composition according to formula:

$$Cu_{0.014-0.125}Si_{0.03-0.25}Al_{0.44-0.54}P_{0.25-0.47}O_2.$$

Preferably, the Cu containing SAPO-34 has molar composition according to formula:

$$Cu_{0.016-0.083}Si_{0.032-0.17}Al_{0.44-0.54}P_{0.33-0.468}O_2.$$

This formula notation was reported in Microporous and Mesoporous Materials 90 (2006), 188-197 where the Cu was considered to be part of the tetrahedral framework. In this paper, metals in the tetrahedral framework positions were considered to be Cu, Al, P and Si. Where their sum should equal 1 (i.e. $T_1O_2$ where T = tetrahedral metal). Here, in this invention, Al, P and Si are only considered to be in tetrahedral positions and should total to 1 (e.g. $T_1O_2$). This invention indicates Cu in extra-framework positions via $NH_3$ TPD and so the formula is more accurately represented by considering Cu as an extra-framework moiety (i.e. ion-exchange positions).

If, for the purpose of preparing the aqueous solution according to (i), higher amounts of water as described for the gel composition above shall be used, it is conceivable to suitably adjust the water content of the aqueous solution to be in above-described preferred ranges. According to a suitable method preferred among others, the water content can be adjusted by removing water in at least one suitable apparatus. According to this embodiment, the water can be removed at a temperature in the range of, preferably, from 60 to 100°C, more preferably of from 65 to 80°C and particularly preferably of from 65 to 75°C.

Additionally, if the metal source is an alcoholate then the alcohol may be removed by distillation. According to this embodiment, the alcohol can be removed at a temperature in the range of, preferably, from 25 to 100°C, more preferably of from 65 to 90°C and particularly preferably of from 80 to 90°C.

As far as the structure directing agent employed in (i) is concerned, no restriction exists with the proviso that a molecular sieve material having SAPO-34 framework is obtained in (ii).

By way of example, morpholine, tetraethylammonium hydroxide, tetraethylammonium chloride, piperidine, cylcohexylamine, triethanolamine, dipropylamine and other aminoalcohols may be mentioned. Preferably, Morpholine, tetraethylammonium hydroxide, piperidine and tetraethylammonium chloride is employed. Morpholine is especially preferred. Optionally, mixtures of structure directing agent can be used. If mixtures of SDA will be used, the use of mixtures of hydroxides and halides is preferred.

Preferably, the pH of the aqueous solution obtained from (i) and subjected to hydrothermal crystallization according to (ii) is in the range of 4 to 10, more preferably in the range of 4 to 8.5, and even more preferably in the range of 6.5 to 8. More preferably, the pH of the aqueous solution subjected to hydrothermal crystallization according to (ii) is in the range of from 6.5 to 7.5.

Depending on the starting materials employed, it may be necessary to adjust the pH of the aqueous solution subjected to hydrothermal crystallization according to (ii) so that the pH has above-described values. Preferably, adjusting the pH is carried out using an acid which does not contain alkali metal, preferably an acid which does not contain an alkali metal, such as, e.g., sodium or the like.

Preferably, the pH is adjusted to above-described values using acetic acid which may be added as aqueous solution.

Also preferably, the pH is adjusted to above-described values by adjusting the excess quantity of suitable structure directing compounds, for example the respective SDA compounds as described above.

As already described above, the at least one source for $SiO_2$, $Al_2O_3$, P and Cu, are preferably free of alkali metal, in particular free of sodium. Thus, for example, adjusting to pH of the aqueous solution subjected to hydrothermal crystallization according to (ii) - if necessary - is preferably carried out using bases which are free of alkali metal, in particular free of sodium.

The term "free of alkali metal" and "free of sodium", as used in this context of the present invention relates to the fact that no starting materials are employed which contain alkali metal, in particular sodium as essential component, such as, e.g., sodium aluminate as source for $Al_2O_2$, or the like. However, this term does not exclude such embodiments where the starting materials explicitly described contain certain amounts of alkali metals, in particular sodium as impurities. By way of example, such impurities are typically present in amounts of 2000 ppm or less, preferably 1000 ppm or less, more preferably 500 ppm or less, even more preferably 300 ppm or less and even more preferably 100 ppm or less.

Therefore, the present invention also relates to above-described process, wherein the aqueous solution subjected to hydrothermal crystallization according to (ii) is free of alkali metal, in particular free of sodium.

Accordingly, the present invention also relates to a Cu containing SAPO-34 obtained and/or obtainable from the inventive process, and having a alkali metal content, in particular an sodium content of 2000 ppm or less, preferably 1000 ppm or less, more preferably 500 ppm or less, even more preferably of 300 ppm or less and even more preferably 100 ppm or less.

The term "an alkali metal content of X ppm or less" as used in the context of the present, relates to an embodiment according to which the sum of all alkali metals present does not exceed X ppm.

According to further embodiments, the aqueous solution subjected to (ii) may contain at least one further metal, such as, for example, transition metals and/or lanthanides.

According to the embodiment according to which the aqueous solution may contain a transition metal, the at least one further metal is preferably selected from the group consisting of Fe, Co, Ni, Zn, Y, Ce, Zr and V. Generally, all suitable sources for Fe, Co, Ni, Zn, Y, Ce, Zr and V can be employed. By way of example, nitrate, oxalate, sulphate, acetate, carbonate, hydroxide, acetylacetonate, oxide, hydrate, and/or salts such as chloride, bromide, iodide may be mentioned.

Therefore, the present invention also describes a process wherein the aqueous solution subjected to (ii) contains at least one further metal source, said further metal being selected from the group consisting of Fe, Co, Ni, Zn, Y, and V.

According to a further embodiment of the present invention, the aqueous solution subjected to (ii) contains a suitable lanthanide source, such as a suitable cerium source or a suitable lanthanum source, preferably a suitable La (lanthanum) source. While all suitable La sources are conceivable, a preferred La source, e.g., is a La salt which is soluble in the aqueous solution. A preferred La source is, among others, lanthanum nitrate. Still more preferably, as far as the overall process for producing the Cu containing molecular sieve material is concerned, the lanthanum source is only employed in the aqueous solution subjected to (ii). In particular, neither the dried nor the calcined molecular sieve material is subjected to any treatments wherein a La source is employed.

Generally, the La source can be employed in such amounts that the finally obtained material has the desired La content. Preferably, the aqueous solution subjected to (ii) has an atomic ratio of La : Cu in the range of from 1:10 to 1:100, more preferably in the range of from 1:20 to 1:80, even more preferably in the range of from 1:30 to 1:60.

Generally, there are no specific restrictions in which order the starting materials are mixed to obtain the aqueous solution according to (i).

Thus, the starting materials comprising water, source of phosphorus, silica, alumina and copper and SDA can be mixed in all possible orders known by the skilled person of the art.

By way of example, it is possible to mix the water with the source of phosphorus before mixing/dissolving the aluminum source and copper source before the subsequent addition of the SDA and silica source.

For low silica or low water content gels it is preferred to first mix the water with the SDA before mixing/dissolving the aluminum source and copper source before the subsequent addition of the phosphorous and silica source.

The water may also be divided between the SDA source and phosphorus source to lessen the concentration of these solutions and minimize heat generated through addition of acid and base.

By way of example, an acidic solution containing the phosphoric source, preferably phosphoric acid, copper and aluminum source can be prepared separately from an alkaline solution of SDA and silica before mixing the two solutions. Water can be distributed in various proportions between the two solutions.

When dissolution of reagents is required it is preferred to wait for complete dissolution before proceeding to the next reagent addition.

The temperature during the preparation of the aqueous solution according to (i) is preferably in the range of from 20 to 100°C, more preferably in the range of from 20 to 60°C, and particularly preferably in the range of from 20 to 30°C.

Cooling of the mixing vessel during the mixing of acidic and alkaline sources can be used to control heat generation.

In principle, it is possible to heat the aqueous solution according to (ii) under any suitable pressure and any suitable temperature or temperatures, provided that it is ensured that molecular sieve material of SAPO-34 structure crystallizes in the solution. Here, temperatures which, at the chosen pressure, are above the boiling point of the solution obtained according to (i) are preferred. Temperatures of up to 220°C at atmospheric pressure are more preferred. The term "atmospheric pressure" as used in the context of the present invention designates a pressure of, ideally, 101 325 Pa, which, however, may be subject to variations within the limits known to the person skilled in the art.

According to a particularly preferred embodiment of the process according to the invention, the hydrothermal crystallization according to (ii) is carried out in an autoclave.

The present invention accordingly also relates to a process as described above, wherein the hydrothermal crystallization in (ii) is carried out in an autoclave.

The temperature used in the autoclave according to (ii) is preferably in the range of from 100 to 200°C, more preferably in the range of from 120 to 195°C, more preferably in the range of from 130 to 190°C, more preferably in the range of from 140 to 185°C and particularly preferably in the range of from 150 to 180°C.

Accordingly, the present invention also relates to a process as described above, wherein the aqueous solution obtained according to (i), optionally after concentration as described above, is heated to a temperature in the range of from 100 to 200°C according to (ii) in an autoclave.

According to an even more preferred embodiment of the present invention, the autoclave employed for carrying out the hydrothermal crystallization according to (ii) exhibits means for heating and cooling the content of the autoclave, more preferably external heating means such as a suitable heating/cooling jacket.

Heating the aqueous solution to said temperatures can be carried out continuously; discontinuously, such as stepwise; or semi-continuously, such as continuously up to a first temperature, holding the solution at this temperature for a given period of time, and further heating the solution from the first temperature to the desired final temperature, as described above. Also two or more temperature plateaus are conceivable. Preferably, the aqueous solution is heated continuously with a temperature profile in the range of from 5 to 200°C/h, more preferably from 10 to 55°C/h, and even more preferably 15 to 25°C/h.

This temperature to which the aqueous solution is heated according to (ii) can in principle be maintained for a time period of less than 72 h, more preferably of less than 48 h, more preferably of less than 40 h, more preferably of less than 30 h, more preferably of up to 20 h more preferably from 1 h to 72 h, more preferably from 1 to 48 h, more preferably from 1 to 40 h, more preferably from 1 to 30 h, more preferably from 1 to 20 h, more preferably from 20 to 30 h.

Therefore, the present invention also relates to a process as described above, wherein the hydrothermal crystallization according to (ii) is carried out at for a time period of of up to 72 h, preferably up to 48 h, more preferably up to 40 h, more preferably up to 30 h and more preferably up to 20 h.

During crystallization, pressure or pressures in the range of from 1 to 20 bar, more preferably from 2 to 16 bar and even more preferably from 5 to 10 bar are especially preferred.

Accordingly, the present invention also relates to a process as described above, wherein the colloidal solution obtained according to (i), optionally after concentration as described above, is heated for a time period in the range of up to 72 h, preferably of up to 48 h, preferably of up to 40 h, preferably of up to 30 h and more preferably from 1 to 30 h according to (ii) at a pressure or at pressures in the range of from 1 to 20 bar, more preferably from 2 to 16 bar and even more preferably from 5 to 10 bar.

The aqueous solution is preferably suitably stirred for the crystallization according to (ii). It is also possible to rotate the reaction vessel in which the crystallization is carried out. Typical values as far as said stirring or rotation is concerned are in the range of from 50 to 500 rpm (revolutions per minute), more preferably from 50 to 300 and even more preferably from 200 to 300 are especially preferred.

While it is possible in the context of the present invention to add suitable seeding material to the solution subjected to stage (ii), such as optionally dried and/or calcined molecular sieve material having SAPO-34 structure, it is preferred to carry out the hydrothermal crystallization and in particular the whole inventive process without seeding material.

According to one embodiment of the process according to the invention, the crystallization according to (ii) can be terminated by suitable quenching. Here, it is particularly preferred to add water to the suspension, wherein the water has a temperature which is suitable for terminating the crystallization.

According to another embodiment of the present invention, the crystallization according to (ii) is terminated without quenching, preferably by terminating supply of heat to the autoclave, more preferably by terminating supply of heat to the autoclave via the jacket of the autoclave. Terminating the supply of heat can be carried out by either terminating supply of heating medium to the jacket or by terminating supply of heating medium and passing at least one suitable cooling medium through the jacket.

After hydrothermal crystallization according to (ii), the mother liquor containing the inventive Cu containing SAPO-34 is suitably separated from said mother liquor. Prior to separation, the temperature of the mother liquor containing the SAPO-34 material may be suitably decreased to a desired value employing a suitable cooling rate. Typical cooling rates are in the range of from 15 to 45°C/h, preferably from 20 to 40°C/h, and even more preferably from 25 to 35°C/h.

Typical temperatures of the cooled mother liquor containing the inventive Cu containing molecular sieve material having SAPO-34 structure are in the range of from 25 to 55°C, preferably of from 35 to 50°C.

According to one embodiment of the process according to the invention, the Cu containing molecular sieve material having SAPO-34 structure is separated in a suitable manner in at least one step from the suspension, i.e. the mother liquor containing the molecular sieve material, obtained from (ii). This separation can be effected by all suitable methods known to the skilled person, for example, by decantation, filtration, ultrafiltration, diafiltration or centrifugation methods or, for example, spray drying and spray granulation methods.

The suspension obtained according to (ii) as such or the suspension obtained by concentrating the suspension obtained according to (ii) can be subjected to the separation, for example separation by spray methods. Concentrating the suspension obtained according to (ii) can be achieved, for example, by evaporating, as for example evaporating under reduced pressure, or by cross flow filtration. Likewise, the suspension obtained according to (ii) can be concentrated by separating the suspension according to (ii) into two fractions wherein the solid contained in one of both fractions is separated off by filtration, ultrafiltration, diafiltration, or centrifugation or spray methods and is suspended after an optional washing step and/or drying step in the other fraction of the suspension. The sprayed material, obtained by spray drying and spray granulation drying, such as fluidized-bed spray granulation drying, as combined separation and drying methods, can contain solid and/or hollow spheres, and can substantially consist of such spheres, respectively, which have, for example, a diameter in the range of from 5 to 500 $\mu$m or also 5 to 300 $\mu$m. Single component or multiple component nozzles can be used during spraying as spray nozzles. The use of a rotary atomizer is also conceivable. Possible inlet temperatures for the used carrier gas are, for example, in the range of from 200 to 600 °C, preferably in the range of from 225 to 550 °C, and more preferably in the range of from 300 to 500 °C. The outlet temperature of the carrier gas is, for example, in the range of from 50 to 200 °C. Air, lean air or oxygen-nitrogen mixtures with an oxygen content of up to 10 vol. %, preferably of up to 5 vol. %, more preferably of less than 5 vol. %, as, for example, of up to 2 vol. %, may be mentioned as carrier gases. The spray methods can be carried out in counter-current or co-current flow.

Therefore, the present invention also relates to above-described process, additionally comprising

> (iii) separating the Cu containing molecular sieve material from the suspension obtained according to (ii).

Depending on the structure directing agent content of the mother liquor separated from the molecular sieve material, the structure directing agent can be re-used in (i), optionally after having been suitably separated from the mother liquor. According to an alternative, the mother liquor containing structure directing agent can be re-used as such in (i), without separation of the structure directing agent.

If, e.g., the molecular sieve material is separated by filtration or centrifugation or concentration of the suspension obtained according to (ii), it is preferred that the separated molecular sieve material is suitably dried. Before the separated molecular sieve material is dried, it may be washed at least once with a suitable washing agent, wherein it being is possible to use identical or different washing agents or mixtures of washing agents in the case of at least two of the washing steps and to use identical or different drying temperatures in the case of at least two drying steps.

Washing agents used may be, for example, water, alcohols, such as, for example, methanol, ethanol or propanol, or mixtures of two or more thereof. For example, mixtures of two or more alcohols, such as, for example, methanol and ethanol or methanol and propanol or ethanol and propanol or methanol and ethanol and propanol, or mixtures of water and at least one alcohol, such as, for example, water and methanol or water and ethanol or water and propanol or water and methanol and ethanol or water and methanol and propanol or water and ethanol and propanol or water and methanol and ethanol and propanol, may be mentioned as mixtures. Water or a mixture of water and at least one alcohol, preferably water and ethanol, is preferred, wherein water as the sole washing agent being is very particularly preferred.

The drying temperatures here are preferably in the range of from room temperature to 200°C, more preferably of from 60 to 180°C, more preferably of from 80 to 160°C and more preferably in the range of from 100 to 150°C.

The durations of drying are preferably in the range of from 0.1 to 48 h, more preferably of from 0.1 to 24 h, even more preferably of from 0.1 to 4 h.

Accordingly, the present invention also relates to the process as described above, additionally comprising drying the Cu containing molecular sieve material, separated according to (iii), at a temperature in the range of from 100 to 150°C.

Moreover, the present invention also relates to the process as described above, additionally comprising

> (iii) separating the Cu containing molecular sieve material from the suspension obtained according to (ii);
> (iv) drying the Cu containing molecular sieve material, separated according to (iii), at a temperature in the range of from 100 to 150°C.

If, e.g., the separation is carried out by means of spray drying methods or spray granulation methods, as described above, this method provides the advantage that the separation of the molecular sieve material from the suspension obtained according to (ii) and the drying of the molecular sieve material can be carried out in a single step.

Additionally, in particular where the separation is carried out by means of spray drying methods or spray granulation methods, suitable compounds may be added to the suspension which is subjected to the spray drying methods or spray granulation methods. Such compounds can be pore forming agents resulting in, e.g., micropores and/or mesopores, binder compounds, or the like. In general, suitable binders are all compounds which impart adhesion and/or cohesion between the molecular sieve material particles to be bonded which goes beyond the physisorption which may be present without a binder. Examples of such binders are metal oxides, such as, for example, $SiO_2$, $Al_2O_3$, $TiO_2$, $ZrO_2$ or MgO or clays, or mixtures of two or more of these compounds.

Therefore, the following preferred separation, washing and or drying sequences may be listed by way of example in the context of the present invention:

(a) The mother liquor containing the Cu containing molecular sieve material having SAPO-34 framework type is subjected to spraying without further treatment, i.e. it is subjected to spraying as obtained from hydrothermal crystallization, optionally after suitable cooling. Prior to spraying, the suspension can be admixed with suitable compounds such as pore forming agents or binder compounds.

(b) The mother liquor containing the Cu containing molecular sieve material having SAPO-34 framework type is subjected to spraying after suitable concentration, as described above. Prior to spraying, the suspension can be admixed with suitable compounds such as pore forming agents or binder compounds.

(c) The mother liquor containing the Cu containing molecular sieve material having SAPO-34 framework type is subjected to a separation stage different from spraying, e.g. to decantation, filtration, ultrafiltration, diafiltration or centrifugation.

The sprayed material obtained from (a) or (b) or the material obtained from (c) can be washed at least once, with at least one suitable washing agent, optionally admixed with at least one suitable base and/or at least one suitable acid. After the washing stage or the washing stages, the material can be suitably dried wherein the drying temperatures are preferably in the range of from room temperature to 200°C, more preferably of from 60 to 180°C, more preferably of from 80 to 160°C, and more preferably in the range of from 100 to 150°C, the durations of drying preferably being in the range of from 0.1 to 48 h, more preferably of from 4 to 36 h.

If the material is obtained according to (c), the optionally washed and optionally dried material can be slurried in at least one suitable compound such as, e.g. water. The suspension thus obtained may be subjected to a spraying stage such as spray drying or spray granulation drying. Prior to spraying, at least one suitable further compound such as a pore forming agent and/or a binder compound may be added to the suspension. After this spraying stage, the sprayed material may be subjected to at least one suitable washing stage, optionally followed by a subsequent suitable drying stage.

According to a particularly preferred embodiment of the process according to the invention, the molecular sieve material obtained according to (iii) or (iv), preferably after (iv), is calcined in at least one additional step.

Therefore, the present invention also relates to above-described process, additionally comprising calcining the Cu containing molecular sieve material.

It is possible in principle to feed the suspension comprising the molecular sieve material directly to the calcination. Preferably, the molecular sieve material is separated from the suspension, as described above, according to (iii), before the calcination. Even more preferably, the molecular sieve material is dried before the calcination.

The calcination of the molecular sieve material obtained according to (ii) and/or (iii) and/or (iv) is preferably effected at a temperature in the range of up to 750°C. According to one alternative, if the calcination is carried out under static conditions, such as, e.g., in a muffle furnace, temperatures of up to 500 to 650°C are preferred. According to another alternative, if the calcination is carried out under dynamic conditions, such as, e.g., in a rotary calciner, temperatures of up to 500 to 750°C are preferred.

According to a preferred embodiment of the process according to the invention, the molecular sieve material is heated thereby from room temperature or from the temperature employed for the drying stage to a temperature of up to 750°C, wherein, more preferably, the heating rate is in the range of from 0.1 to 10°C/min, more preferably of from 0.2 to 5°C/min and particularly preferably in the range of from 1 to 4°C/min. This temperature is preferably, for example, in the range of from 200 to 750°C. Calcination temperatures in the range of from 250 to 700°C are preferred, temperatures in the range of from 300 to 550°C are particularly preferred.

According to an especially preferred embodiment of the present invention, calcination is carried out for such a period of time that the total organic carbon (TOC) content of the resulting calcined material is 0.5 wt.-% or less, preferably 0.1 wt.-% or less, based on the total weight of the calcined material.

Therefore, the present invention also relates to above-described process, additionally comprising

(v) calcining the Cu containing molecular sieve material, preferably dried according to (iv), at a temperature in the range of from 300 to 550°C,

wherein, according to an even more preferred embodiment, the heating rate for achieving this temperature is in the range of from 0.1 to 10 °C/min, in particular in the range of from 1 to 4 °C/min.

According to a possible embodiment of the process according to the invention, the calcination is carried out stepwise at successive temperatures. The term "stepwise at successive temperatures" as used in the context of the present invention designates a calcination in which the molecular sieve material to be calcined is heated to a certain temperature, kept at this temperature for a certain time and heated from this temperature to at least one further temperature and kept there in turn for a certain time.

By way of example, a stepwise calcination is described in the international patent application having the application number PCT/EP2009/056036. PCT/EP2009/056036 is incorporated by reference.

The calcination can be effected in any suitable atmosphere, such as, for example, air, lean air depleted in oxygen, oxygen, nitrogen, water steam, synthetic air, carbon dioxide. The calcination is preferably effected under air. It is also conceivable that calcination is carried out in a dual mode, i.e. a mode comprising a first calcination in an oxygen-reduced or oxygen-free atmosphere, said mode comprising a second calcination in an oxygen-enriched or pure oxygen atmosphere.

According to a preferred embodiment, a first calcination step is carried out in a atmosphere comprising 5 to 15 % air and 80 to 95 % nitrogen, whereas the second calcination step is carried out in a atmosphere comprising 100 % air.

The calcination can be carried out in any apparatus suitable for this purpose. The calcination is preferably effected under static and/or dynamic conditions, such as in a rotating tube, in a belt calciner, in a muffle furnace, in situ in an apparatus in which the molecular sieve material is subsequently used for the intended purpose, for example as a molecular sieve, catalyst, or for any other application described below. A rotating tube and a belt calciner are particularly preferred.

Accordingly, the present invention also relates to above-described process, additionally comprising

(iii) separating the Cu containing molecular sieve material from the suspension obtained according to (ii);
(iv) drying the Cu containing molecular sieve material, separated according to (iii), preferably at a temperature in the range of from 100 to 150 °C;
(v) calcining the Cu containing molecular sieve material, dried according to (iv), preferably at a temperature in the range of from 300 to 650 °C.

According to a conceivable embodiment of the present invention, according to which the molecular sieve material obtained according to (ii) is separated from the suspension obtained from (ii) by means of spray drying methods or spray granulation methods, the conditions employed during the separation may be chosen so that during the separation at least a portion of the molecular sieve material is at least partly calcined. Thereby, during the separation, temperatures of preferably at least 300 °C are chosen. This embodiment may provide the advantage that the separation step, the drying step and at least partly the calcination step are combined to a single step.

According to a preferred embodiment of the process according to the invention, the yield of the Cu containing SAPO-34 obtained by the process according to the invention is at least 50 %, preferably at least 55 %, more preferably at least 60 %, even more preferably 65 %, even more preferably 70 %, even more preferably 75 %, even more preferably 80 %.

The present invention also relates to the Cu containing molecular sieve material having framework structure SAPO-34, obtainable or obtained by above-described process.

According to a particularly preferred embodiment, the present invention is especially characterized in that only in stage (i), a copper source is employed. In no subsequent stage of the process any other copper source is employed. In particular, neither after drying nor after calcining, the obtained Cu containing molecular sieve material having framework structure CHA is contacted with a copper source. Therefore, the present invention allows for a straight-forward direct synthesis of a Cu containing SAPO-34 molecular sieve material wherein no post-synthesis stage for contacting a (copper-free) SAPO-34 molecular sieve material with a suitable Cu source has to be carried out.

Therefore, the present invention also relates to above-described process and the Cu containing molecular sieve material having SAPO-34 framework structure obtainable or obtained by this process, wherein, after (i), no Cu source is employed. In particular, neither the dried nor the calcined molecular sieve material is subjected to any treatments wherein a Cu source is employed.

According to an even more preferred embodiment wherein the Cu containing molecular sieve material is synthesized, as described above, in the absence of alkali metal, in particular in the absence of sodium, the process of the present invention allows for an even more simplified process since the time consuming ion-exchange steps usually to be employed - namely

(I) synthesis of the Na form of a CHA molecular sieve material,
(II) calcination, removing the template (SDA) thus forming the H-Na form,
(III) transformation to the $NH_4^+$ form, and, finally
(IV) transformation to the $Cu^{2+}$ form

can be avoided.

Consequently, the present invention allows for an economically and also ecologically advantageous process for the preparation of a Cu containing molecular sieve material having SAPO-34 framework structure.

The present invention also relates to a Cu containing molecular sieve material as such, having framework structure SAPO-34, having a molar composition according to formula:

$$Cu_{0.007-0.125}Si_{0.01-0.25}Al_{0.44-0.54}P_{0.25-0.49}O_2$$

having an amount of impurity phase of less than 25 % and having a BET surface area of at least 400 m$^2$/g.

In this context, the term "Cu containing molecular sieve material as such, having framework structure SAPO-34" relates to the calcined molecular sieve material which is essentially free of water and from which the structure directing agent and any other organic compounds such as organic acids have been essentially removed by calcination.

According to a preferred embodiment of the present invention, the calcined molecular sieve material, obtainable or obtained by the process of the present invention, or the Cu containing molecular sieve material as such, having a molar composition according to formula:

$$Cu_{0.014-0.125}Si_{0.03-0.25}Al_{0.44-0.54}P_{0.25-0.47}O_2.$$

Preferably, the Cu containing SAPO-34 has molar composition according to formula:

$$Cu_{0.016-0.083}Si_{0.032-0.17}Al_{0.44-0.54}P_{0.33-0.468}O_2.$$

Preferably, the calcined molecular sieve material, obtainable or obtained by the process of the present invention, or the Cu containing molecular sieve material as such, comprises an amount of impurity phase less than 20 % (based on BET calculations), more preferably less than 15 %, even more preferably less than 10 %, even more preferably less than 5 %, even more preferably less than 2 %, even more preferably less than 1 %. Preferably, the Cu containing SAPO-34 composition comprises an amount of impurity phase in the range from about 0 to about 25 %, more preferably from about 0 to about 20 %, even more preferably from about 0 to 15 %, even more preferably from about 0 to 10 wt.%, even more preferably from about 0 to 5 %. All numbers calculated from surface area relationship or xrd.

The term "impurity phase" as used in this context of the present invention is not limited to the following components but mainly relates to SAPO-20 (SOD topology), copper oxide, copper (II) oxide, silicates (e.g. tridymite and cristabolite), aluminophosphates and amorphous silicates, aluminates, phosphates, silicoaluminophosphates, silicophosphates and aluminophosphates. The impurity phase may be crystalline or amorphous.

Preferably, the calcined molecular sieve material, obtainable or obtained by the process of the present invention, or the Cu containing molecular sieve material as such, exhibits a BET surface area, determined according to DIN 66131, of at least 450 m$^2$/g, more preferably of at least 500 m$^2$/g, even more preferably of at least 550 m$^2$/g. Preferably, the Cu containing SAPO-34 composition exhibits a BET surface area in the range from about 400 to about 700 m$^2$/g, more preferably from about 450 to about 700 m$^2$/g, even more preferably from about 500 to 700 m$^2$/g, even more preferably from about 550 to 700 m$^2$/g, even more preferably from about 550 to 650 m$^2$/g, even more preferably from about 550 to 600 m$^2$/g.

Preferably, the calcined molecular sieve material, obtainable or obtained by the process of the present invention, or the Cu containing molecular sieve material as such, exhibits a Langmuir surface area, determined according to DIN 66135, of at least 600 m$^2$/g, more preferably of at least 650 m$^2$/g, even more preferably of at least 700 m$^2$/g. Preferably, the Cu containing SAPO-34 composition exhibits a Langmuir surface area in the range from about 600 to about 850 m$^2$/g, more preferably from about 650 to about 850 m$^2$/g, even more preferably from about 700 to 850 m$^2$/g, even more preferably from about 750 to 850 m$^2$/g, even more preferably from about 750 to 800 m$^2$/g.

The Cu content of the molecular sieve material, calculated as CuO, is preferably at least 0.5 wt.-%, more preferably at least 1.0 wt.-%, more preferably at least 1.5 wt.-%, more preferably at least 2.0 wt.-% and even more preferably at least 2.5 wt.-%, in each case based on the total weight of the calcined molecular sieve material. Even more preferably, the Cu content of the molecular sieve material, calculated as CuO, is in the range of up to 10 wt.-%, more preferably of up to 5 wt.-%, more preferably of up to 4.0 wt.-%, and even more preferably of up to 3.5 wt.-%, in each case based on the total weight of the calcined molecular sieve material reported on a volatile-free basis. Therefore, preferred ranges of the Cu content of the molecular sieve material, calculated as CuO, are from 1.0 to 10.0 wt.-%, more preferably from 1.5 to 5 wt.-%, more preferably from 1.5 to 4.0 wt.-%, and even more preferably from 1.5 to 3.5 wt.-%, in each case based on the total weight of the calcined molecular sieve material. All wt.-% values are reported on a volatile-free basis.

Therefore, the present invention also relates to the molecular sieve material as described above, wherein the Cu content of the molecular sieve material, calculated as CuO, is in the range of from 1.5 to 3.5 wt.-%, based on the total weight of the calcined molecular sieve material as reported on a volatile-free basis.

Even more preferably, the calcined molecular sieve material described above is free of alkali metal, in particular free of sodium. The term "free of alkali metal" and "free of sodium", as used in this context of the present invention relates to molecular sieve materials having an alkali metal content, and a sodium content, respectively, of 2000 ppm or less, preferably 500 ppm or less, more preferably 300 ppm or less.

According to a conceivable embodiment of the present invention, the molecular sieve material as described above additionally contains at least one metal selected from the group consisting of Fe, Co, Ni, Zn, Y, Ce, La, Zr and V. More preferably, the molecular sieve material as described above essentially consists of Si, Al, Cu, and O, and optionally La, and contains essentially no further element.

According to one embodiment of the present invention, the crystallites of the calcined molecular sieve material as described above or of the calcined molecular sieve material obtainable or obtained according to the process as described above wherein separation according to have a mean length in the range of from 0.1 to 10 micrometers, preferably in the range of from 0.1 to 5 micrometers, determined via SEM.

According to a preferred embodiment of the present invention, the calcined molecular sieve material, obtainable or obtained by the process of the present invention, or the Cu containing molecular sieve material as such, having SAPO-34 framework structure, has a TOC content of 0.1 wt.-% or less, based on the total weight of the molecular sieve material.

According to a preferred embodiment of the present invention, the calcined molecular sieve material, obtainable or obtained by the process of the present invention, or the Cu containing molecular sieve material as such, having SAPO-34 framework structure, has a thermal stability, determined via differential thermal analysis or differential scanning calorimetry, in the range of from 900 to 1400 °C, preferably in the range of from 1100 to 1400 °C, more preferably in the range of from 1150 to 1400 °C.

The $NH_3$ TPD spectra of the molecular sieve material shows preferably at least four main peak maxima. Even more preferred the low temperature peak is in the range of 100 to 250 °C, the middle temperature peak is in the range of 200 to 400 °C, the high temperature peaks are in the range of 400 to 430 °C and in the range of 430 to 450 °C. The middle peak is most preferred in the range of 340 to 380 °C.

In particular, the present invention relates to a Cu containing molecular sieve material as such, having framework structure SAPO-34, having a molar composition according to formula:

$$Cu_{0.007-0.125}Si_{0.01-0.25}Al_{0.44-0.54}P_{0.25-0.49}O_2$$

having an amount of impurity phase of less than 25 % and having a BET surface area of at least 400 $m^2$/g and having at least four main peak maxima in the $NH_3$ TPD spectra, wherein the low temperature peak is in the range of 100 to 250, the middle temperature peak is in the range of 200 to 400, the high temperature peaks are in the range of 400 to 430 and in the range of 430 to 450 °C.

According to an even more preferred embodiment, the present invention relates to a Cu containing molecular sieve material as such, having framework structure SAPO-34, having a molar composition according to formula:

$$Cu_{0.014-0.125}Si_{0.03-0.25}Al_{0.44-0.54}P_{0.25-0.47}O_2.$$

having an amount of impurity phase of less than 15 % and having a BET surface area of at least 500 $m^2$/g and having at least four main peak maxima in the $NH_3$ TPD spectra, wherein the low temperature peak is in the range of 100 to 250, the middle temperature peak is in the range of 200 to 400, the high temperature peaks are in the range of 400 to 430 and in the range of 430 to 450 °C.

According to an even more preferred embodiment, the present invention relates to a Cu containing molecular sieve material as such, having framework structure SAPO-34, having a molar composition according to formula:

$$Cu_{0.016-0.083}Si_{0.032-0.17}Al_{0.44-0.54}P_{0.33-0.486}O_2$$

having an amount of impurity phase of less than 5 % and having a BET surface area of at least 550 $m^2$/g and having at least four main peak maxima in the $NH_3$ TPD spectra,
wherein the low temperature peak is in the range of 100 to 250, the middle temperature peak is in the range of 340 to 380, the high temperature peaks are in the range of 400 to 430 and in the range of 430 to 450 °C.

In particular, the present invention relates to a Cu containing molecular sieve material having SAPO-34 framework structure, obtainable or obtained by a process, comprising

(i) preparation of an aqueous solution containing at least one silicon source, at least one aluminum source, at least one phosphorous source, at least one copper source and at least one structure directing agent (SDA) suitable for the preparation of SAPO-34;

(ii) hydrothermal crystallization of the aqueous solution according to (i), obtaining a suspension containing the copper containing SAPO-34;

(iii) separating the Cu containing molecular sieve material from the suspension obtained according to (ii);

(iv) drying the Cu containing molecular sieve material, separated according to (iii), preferably at a temperature in the range of from 100 to 150°C;

(v) calcining the Cu containing molecular sieve material, dried according to (iv),

preferably at a temperature in the range of from 300 to 650°C;

wherein, the molar gel composition in (i)is according to formula:

$$a\ SiO_2: 1\ Al_2O_3: b\ P_2O_5:c\ CuO: d\ H_2O: e\ SDA$$

wherein a is in the range from 0.05 to 0.65;
wherein b is in the range from 0.4 to 1;
wherein c is in the range from 0.03 to 0.5;
wherein d is in the range from 0 to 200;
wherein e is in the range from 1 to 10
and wherein, after (i), no Cu source is employed.

According to an even more preferred embodiment, the present invention relates to a Cu containing molecular sieve material having CHA framework structure, obtainable or obtained by a process, comprising

(i) preparation of an aqueous solution containing at least dry-process silica or col-loidal silica as $SiO_2$ source, aluminum hydroxide, $Al(OH)_3$ or aluminumtriisopro-pylate as $Al_2O_3$ source, phosphoric acid as $P_2O_5$ source, morpholine, tetraethyl-ammonium hydroxide, piperidine or tetraethylammonium chloride as structure directing agent and copper acetate, copper fluoride and copper chloride or copper tetraamine as copper source.

(ii) hydrothermal crystallization of the aqueous solution according to (i), obtaining a suspension containing the copper containing SAPO-34, wherein the temperature used in (ii) is in the range of 100 to 200°C and the solution is maintained in that temperature range for a time period of less than 72 hours;

(iii) separating the Cu containing molecular sieve material from the suspension obtained according to (ii);

(iv) drying the Cu containing molecular sieve material, separated according to (iii), preferably at a temperature in the range of from 100 to 150°C;

(v) calcining the Cu containing molecular sieve material, dried according to (iv),

preferably at a temperature in the range of from 300 to 650°C;

wherein, the molar gel composition in (i)is according to formula:

$$a\ SiO_2: 1\ Al_2O_3: b\ P_2O_5:c\ CuO: d\ H_2O : e\ SDA$$

wherein a is in the range from 0.1 to 0.4;
wherein b is in the range from 0.7 to 1;
wherein c is in the range from 0.06 to 0.28;
wherein d is in the range from 0 to 100;
wherein e is in the range from 1 to 4

and wherein, after (i), no Cu source is employed.

According to a particularly preferred embodiment, the present invention relates to a Cu containing molecular sieve material having CHA framework structure, obtainable or obtained by a process, comprising

(i) preparation of an aqueous solution containing at least dry-process silica or col-loidal silica as $SiO_2$ source, aluminum hydroxide, $Al(OH)_3$ or aluminumtriisopro-pylate as $Al_2O_3$ source, phosphoric acid as $P_2O_5$ source, morpholine, tetraethyl-ammonium hydroxide, piperidine or tetraethylammonium chloride as structure directing agent and copper acetate, copper fluoride and copper chloride or copper tetraamine as copper source.

(ii) hydrothermal crystallization of the aqueous solution according to (i), obtaining a suspension containing the copper containing SAPO-34, wherein the temperature used in (ii) is in the range of 150 to 180°C and the solution is maintained in that temperature range for a time period of less than 48 hours;

(iii) separating the Cu containing molecular sieve material from the suspension obtained according to (ii);

(iv) drying the Cu containing molecular sieve material, separated according to (iii), preferably at a temperature in the range of from 100 to 150 °C;

(v) calcining the Cu containing molecular sieve material, dried according to (iv),
preferably at a temperature in the range of from 300 to 650 °C;
wherein, the molar gel composition in (i)is according to formula:

$$a\ SiO_2: 1\ Al_2O_3: b\ P_2O_5:c\ CuO: d\ H_2O : e\ SDA$$

wherein a is in the range from 0.1 to 0.25;
wherein b is in the range from 0.8 to 0.95;
wherein c is in the range from 0.06 to 0.13;
wherein d is in the range from 0 to 50;
wherein e is in the range from 2 to 3;
wherein (a+2b) is 2;

and wherein, after (i), no Cu source is employed.

The molecular sieve material according to the present invention may be provided in the form of a powder or a sprayed material obtained from above-described separation techniques, e.g. decantation, filtration, centrifugation, or spraying.

In many industrial applications, it is often desired on the part of the user to employ not the molecular sieve material as powder or sprayed material, i.e. the molecular sieve material obtained by the separation of the material from its mother liquor, optionally including washing and drying, and subsequent calcination, but a molecular sieve material which is further processed to give moldings. Such moldings are required particularly in many industrial processes, e.g. in many processes wherein the molecular sieve material of the present invention is employed as catalyst or adsorbent.

Accordingly, the present invention also relates to a molding comprising the Cu containing molecular sieve material having framework structure SAPO-34 of the present invention.

In general, the powder or sprayed material can be shaped without any other compounds, e.g. by suitable compacting, to obtain moldings of a desired geometry, e.g. tablets, cylinders, spheres, or the like.

By way of example, the powder or sprayed material is admixed with or coated by a suitable refractory binder. The powder or the sprayed material, optionally after admixing or coating by a suitable refractory binder, may be formed into a slurry, for example with water, which is deposited upon a suitable refractory carrier.

The catalysts of the present invention may also be provided in the form of extrudates, pellets, tablets or particles of any other suitable shape, for use as a packed bed of particulate catalyst, or as shaped pieces such as plates, saddles, tubes, or the like.

Also, the catalyst may be disposed on a substrate. Suitable carriers/substrates as well as suitable coating processes are described in the international patent application having the application number PCT/EP2009/056036. PCT/EP2009/056036 is incorporated by reference.

In general, the molecular sieve material described above can be used as molecular sieve, adsorbent, catalyst, catalyst support or binder thereof. Especially preferred is the use as catalyst. For example, the molecular sieve material can be used as molecular sieve to dry gases or liquids, for selective molecular separation, e.g. for the separation of hydrocarbons or amides; as ion exchanger; as chemical carrier; as adsorbent, in particular as adsorbent for the separation of hydrocarbons or amides; or as catalyst. Most preferably, the molecular sieve material according to the present invention is used as catalyst.

Therefore, the present invention also relates to a catalyst, preferably a molded catalyst, containing the Cu containing molecular sieve material having SAPO-34 framework structure as described above.

Moreover, the present invention relates to the use of the Cu containing molecular sieve material having SAPO-34 framework structure as described above as a catalyst.

Moreover, the present invention relates to a method of catalyzing a chemical reaction wherein the Cu containing molecular sieve material having SAPO-34 framework structure according to the present invention is employed as catalytically active material. Among others, said catalyst may be employed as catalyst for the selective reduction (SCR) of nitrogen oxides $NO_x$; for the oxidation of $NH_3$, in particular for the oxidation of $NH_3$ slip in diesel systems; for the decomposition of $N_2O$; for soot oxidation; for emission control in Advanced Emission Systems such as Homogeneous Charge Compression Ignition (HCCI) engines; as additive in fluid catalytic cracking (FCC) processes; as catalyst in organic conversion reactions; or as catalyst in "stationary source" processes. For applications in oxidation reactions, preferably an additional precious metal component is added to the copper chabazite (e.g. Pd, Pt).

Therefore, the present invention also relates to a method for selectively reducing nitrogen oxides $NO_x$ by contacting a stream containing $NO_x$ with a catalyst containing the Cu containing molecular sieve material having SAPO-34 framework structure according to the present invention under suitable reducing conditions; to a method of oxidizing $NH_3$, in particular of oxidizing $NH_3$ slip in diesel systems, by contacting a stream containing $NH_3$ with a catalyst containing the Cu containing molecular sieve material having SAPO-34 framework structure according to the present invention under suitable oxidizing conditions; to a method of decomposing of $N_2O$ by contacting a stream containing $N_2O$ with a catalyst containing the Cu containing molecular sieve material having SAPO-34 framework structure according to the present invention under suitable decomposition conditions; to a method of controlling emissions in Advanced Emission Systems such as Homogeneous Charge Compression Ignition (HCCI) engines by contacting an emission stream with a catalyst containing the Cu containing molecular sieve material having SAPO-34 framework structure according to the present invention under suitable conditions; to a fluid catalytic cracking FCC process wherein the Cu containing molecular sieve material having SAPO-34 framework structure according to the present invention is employed as additive; to a method of converting an organic compound by contacting said compound with a catalyst containing the Cu containing molecular sieve material having SAPO-34 framework structure according to the present invention under suitable conversion conditions; to a "stationary source" process wherein a catalyst is employed containing the Cu containing molecular sieve material having SAPO-34 framework structure according to the present invention.

Most preferably, the molecular sieve material according to the present invention or the molecular sieve material obtainable of obtained according to the present invention is used as catalyst, preferably as molded catalyst, still more preferably as a molded catalyst wherein the molecular sieve material is deposited on a suitable refractory carrier, still more preferably on a "honeycomb" carrier, for the selective reduction of nitrogen oxides $NO_x$, i.e. for SCR (selective catalytic reduction) of nitrogen oxides. In particular, the selective reduction of nitrogen oxides wherein the molecular sieve material according to the present invention is employed as catalytically active material is carried out in the presence ammonia or urea. While ammonia is the reducing agent of choice for stationary power plants, urea is the reducing agent of choice for mobile SCR systems. Typically, the SCR system is integrated in the engine and vehicle design and, also typically, contains the following main components: SCR catalyst containing the molecular sieve material according to the present invention; a urea storage tank; a urea pump; a urea dosing system; a urea injector/nozzle; and a respective control unit.

Therefore, the present invention also relates to a method for selectively reducing nitrogen oxides $NO_x$, wherein a gaseous stream containing nitrogen oxides $NO_x$, preferably also containing ammonia and/urea, is contacted with the molecular sieve material according to the present invention or the molecular sieve material obtainable of obtained according to the present invention, preferably in the form of a molded catalyst, still more preferably as a molded catalyst wherein the molecular sieve material is deposited on a suitable refractory carrier, still more preferably on a "honeycomb" carrier.

The term nitrogen oxides, $NO_x$, as used in the context of the present invention designates the oxides of nitrogen, especially dinitrogen oxide ($N_2O$), nitrogen monoxide (NO), dinitrogen trioxide ($N_2O_3$), nitrogen dioxide ($NO_2$), dinitrogen tetroxide ($N_2O_4$), dinitrogen pentoxide ($N_2O_5$), nitrogen peroxide ($NO_3$).

The nitrogen oxides which are reduced using a catalyst containing the molecular sieve material according to the present invention or the molecular sieve material obtainable of obtained according to the present invention may be obtained by any process, e.g. as a waste gas stream. Among others, waste gas streams as obtained in processes for producing adipic acid, nitric acid, hydroxylamine derivatives, caprolactame, glyoxal, methyl-glyoxal, glyoxylic acid or in processes for burning nitrogeneous materials may be mentioned.

Especially preferred is the use of a catalyst containing the molecular sieve material according to the present invention or the molecular sieve material obtainable or obtained according to the present invention for removal of nitrogen oxides $NO_x$ from exhaust gases of internal combustion engines, in particular diesel engines, which operate at combustion conditions with air in excess of that required for stoichiometric combustion, i.e., lean.

Therefore, the present invention also relates to a method for removing nitrogen oxides $NO_x$ from exhaust gases of internal combustion engines, in particular diesel engines, which operate at combustion conditions with air in excess of that required for stoichiometric combustion, i.e., at lean conditions, wherein a catalyst containing the molecular sieve material according to the present invention or the molecular sieve material obtainable or obtained according to the present invention is employed as catalytically active material.

The present invention also relates to an exhaust gas treatment system comprising an exhaust gas stream optionally containing a reductant like ammonia, urea and/or hydrocarbon, preferably ammonia or urea, and a catalyst containing a copper containing silicoaluminophosphate, obtainable or obtained by above-described process, disposed on a substrate, a soot filter and a diesel oxidation catalyst.

The catalyzed or non catalyzed soot filter may be upstream or downstream of said catalyst. The diesel oxidation catalyst is preferably upstream of said catalyst. Preferably said diesel oxidation catalyst and said catalyzed soot filter are upstream from said catalyst.

Preferably, the exhaust is conveyed from the diesel engine to a position downstream in the exhaust system, preferably containing NOx, where a reductant is added and the exhaust stream with the added reductant is conveyed to said catalyst.

For example, a catalyzed soot filter, a diesel oxidation catalyst and a reductant are described in WO 2008/106519 which is incorporated by reference.

When preparing specific catalytic compositions or compositions for different purposes, it is also conceivable to blend the Cu containing material according to the present invention having SAPO-34 structure with at least one other catalytically active material or a material being active with respect to the intended purpose. It is also possible to blend at least two different inventive materials which may differ in the Cu content, and/or in the n $SiO_2$: m $Al_2O_3$: o $P_2O_5$: p Cu molar ratios and/or in the presence or absence of a further metal such as a transition metal and/or a lanthanide such as La, and/or in the specific amounts of a further metal such as a transition metal and/or a lanthanide such as La, or the like. It is also possible to blend at least two different inventive materials with at least one other catalytically active material or a material being active with respect to the intended purpose. By way of example, it is possible to blend at least one inventive material with at least one other molecular sieve material having CHA structure type and being prepared according to the prior art wherein the molecular sieve material, after hydrothermal crystallization, is subjecting to an ion-exchange process wherein, e.g., Cu is introduced. Such mixing of two or more different Cu containing molecular sieve materials according to invention or at least one Cu containing SAPO-34 material according to the invention with at least one other material, such as, e.g., a Cu-CHA material obtained according to the prior art might be useful as catalytic compositions allowing for even better meeting low and high temperature needs in, e.g., catalytic applications.

The following examples shall further illustrate the process and the materials of the present invention.

Examples

Determination of thermal stability

Throughout the examples, thermal stability of the materials was determined with the thermal analysis instrument STA 449C Jupiter. If the determination of thermal stability is referred to in the present invention, it shall be understood that said determination refers to the determination according to this instrument. The thermal analysis instrument STA 449C Jupiter is designed to simultaneously measure the mass changes (TG) and the calorimetric effects (DSC or DTA) at both high and low temperature. The TG technique measures the temperature-induced changes in sample mass. The output signal may be differentiated electronically to yield a DTG curve. The DTA technique measures the difference in temperature between the sample and a reference material. DTA curves provide information on the temperature range wherein a process takes place and allow calculation of the value of the enthalpy change ($\Delta H$). Similar information can be obtained from DSC. The following test conditions were applied: 10 mg of sample were used for TGA/DTA. The temperature ramp rate was 30°C/min from room temperature to 1400 °C.

Collection of XRD pattern

XRD patterns, as collected in the examples and throughout the invention, shall be understood as being determined using a Bruker D 4 Endeavor diffractometer, having 4° Söller slits, V20 variable divergence slits, and scintillator counter as X-ray detector. The following measurement conditions were applied: The samples to be analyzed were measured from 2° to 70° (2 theta), or if a quick result is needed from 2° to 47° (2 theta) with a shorter time/step. Step width of 0.02° and step time of 2 seconds were used.

Analytical Method

CHA and SOD powder patterns are reported by M. M. J. Treacy et al., Collection of Simulated XRD powder patterns for zeolites. SAPO-34 and SAPO-20 are characterized in detail in US 4,440,871 indicating 2 theta positions and intensities with varied composition. It is recognized that substitution of framework and extra-framework atoms can result in a shift in unit cell size and 2-theta positions as generally described in the aforementioned references.

Determination of % impurity by surface area

Example 8 is taken as pure SOD (SAPO-20) phase. Example 5 is taken as pure SAPO-34. Surface areas were determined as outlined previously. The % impurity present can be calculated by considering mixtures of both phases needed to result in the  determined surface area as shown in figure 7 and can be calculated using the following equations:

$$\% \text{ SOD impurity} = -0.131x + 102.44$$

where x is the measured Langmuir surface area

Or

$$\% \text{ SOD impurity} = -0.1766x + 102.39$$

where x is the measured BET surface area

Determination of yield

The yield of solid was determined as the weight of the calcined solid product (including crystalline and amorphous phases) versus the total weight of metal oxides present in the initial gel. This value is expressed as a percentage.

The yield of SAPO-34 was calculated by considering the % impurity phase as outlined above. This value is expressed as a percentage.

Measurement of $NH_3$ temperature programmed desorption (TPD)

$NH_3$-TPD was performed using a chemisorption analysis unit (Micromeritics AutoChem II 2920). The samples were pretreated by heating from room temperature to 600 °C in He flow and holding at 600 °C for 10 minutes and then the temperature was adjusted to 100 °C. $NH_3$ saturation was achieved by flowing 10% $NH_3$-He mixture over the sample. This was followed by evacuation of the sample for 1 hour to remove any excess $NH_3$. The sample was then heated from 100 °C to 600 °C with a heating rate of 10 °C/min under the atmosphere of He. $NH_3$ desorption was observed using thermal conductivity detector (TCD) and mass spectroscopy (MS).

Comparative example 1: commercially available FeBeta

A commercially available FeBeta was used as a reference material. The composition of the material is -36 $SiO_2$: $Al_2O_3$ and ~1.9 wt% $Fe_2O_3$.

Example 2 - 72 hour synthesis of CuSAPO-34

2.1 Reagents and suspension preparation

The following starting materials were employed:

- Phosphoric acid (85 wt%, Bernd Kraft GmbH)
- CuO (≥96%, Bernd Kraft GmbH)
- Morpholine (≥99 %, Bernd Kraft GmbH)
- Pural SB Alumina (Sasol)
- Ludox AS40 (40 wt% $SiO_2$, Grace Davison)
- Deionized water.

In a 3 L beaker, 918.6 g of deionized water were mixed with 162.3 g of phosphoric acid. This solution was stirred for 5 minutes at 250 rpm. This stirring was maintained throughtout the rest of the preparation of the suspension. 5.1 g of CuO was then added and complete dissolution was achieved within 2 minutes with no need for additional heating. Then 116.6 g of Pural SB Alumina were added within 5 minutes. This solution was stirred for 20 minutes at room temperature. Then, 221.4 g of Morpholine were added within 2 minutes which resulted in a rise in temperature to -58 °C. The resulting suspension was stirred for about 60 minutes during which the suspension cooled to room temperature. Subsequently, 76.1 g of Ludox AS40 were added, and the resulting suspension was stirred for about 5 minutes. The pH of the obtained suspension was 8.3.

The suspension had a composition with the following molar ratios:

0.6 $SiO_2$: 0.83 P2O5 : 1 Al2O3 : 3 Morpholine : 0.08 CuO : 64.9 $H_2O$.

This gel was transferred to a 2.5 L autoclave.

2.2 Hydrothermal crystallization

The autoclave was sealed and heated to a temperature of 170 °C. The temperature of 170 °C was maintained for 72 h. Thereby, the mixture in a 2.5 L autoclave was stirred at 250 rpm (revolutions/minute). After 72 hours the autoclave was cooled within a time period of - 5 hours. The suspension was then immediately treated as described in section 2.3.

2.3 Separation, drying, and calcination

After the hydrothermal crystallization, the resulting suspension had a pH of 9.6. This suspension was filtered with a porcelain suction filter with a diameter if 15 cm. The wet product was heated to a temperature of 120 °C in air within 30 min and dried at 120 °C for 240 min. The dried product was then heated to a temperature of 600 °C within 240 min and calcined in air at 600 °C for 300 min. The yield was 178 g. The powder was beige in color.

2.4 Characterization of the product

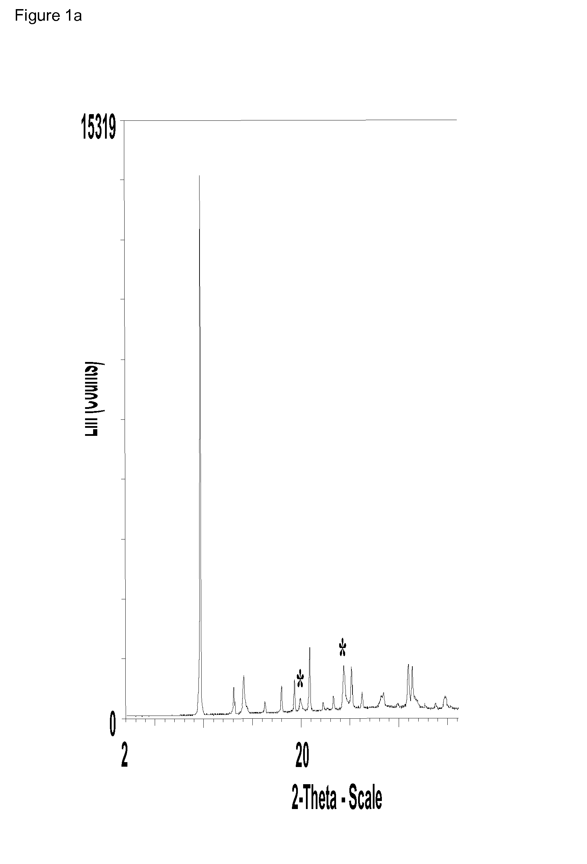

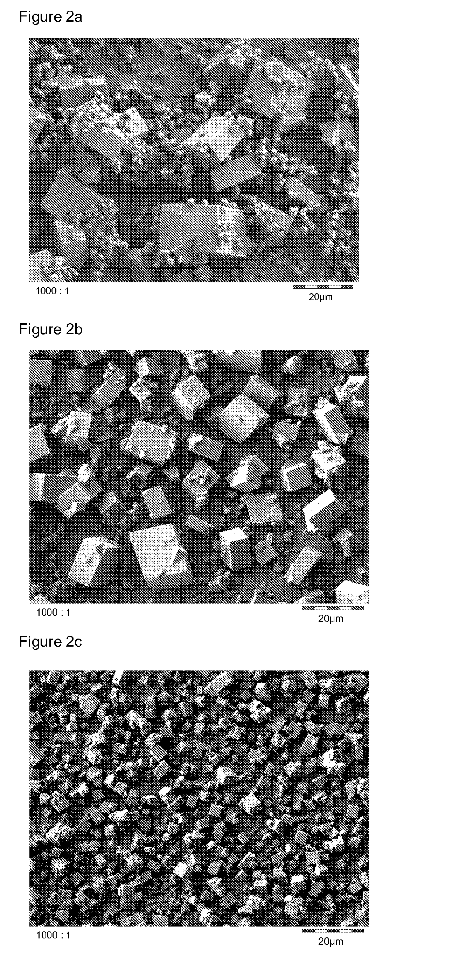

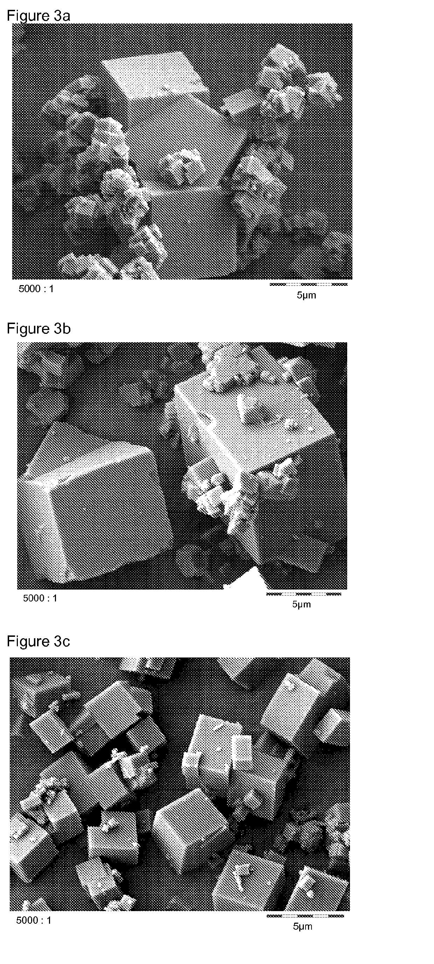

A sample of the calcined material was examined by chemical analysis, XRD, BET and Langmuir surface area, and scanning electron microscopy (SEM).
Elementary analysis showed the material to have 0.7 wt% residual C after calcination. Additionally, 0.59 g of CuO, 15.62 g of $SiO_2$, 42.2 g of $P_2O_5$, 40.77 g of $Al_2O_3$, and 0.12 g of $Na_2O$ in each case per 100 g of calcined material on a volatile-free basis. The average composition of phases can be expressed as $Cu_{0.005}Si_{0.0156}Al_{0.481}P_{0.358}O_2$ (Cu in tetrahedral positions) or $Cu_{0.005}Si_{0.157}Al_{0.483}P_{0.36}O_2$ (Cu in extra-framework sites).
XRD indicated that SAPO-34 and SAPO-20 had been obtained (see Fig. 1a).
The BET surface of the calcined material, determined according to DIN 66131, and the Langmuir surface area, determined according to DIN 66135, are listed in table 1.
SEM images (see figures 2a and 3a) combined with EDAX chemical analysis clearly show the presence of 3 phases. Two copper-containing phases (-5 and -20 $\mu$m cubic crystals) and the other having no copper (~1 to 1.75 $\mu$m cubic crystals). The smaller crystals are SAPO-20. EDAX chemical analysis is reported in table 2.

Example 3 - 40 hour synthesis of CuSAPO-34

3.1 Reagents and suspension preparation

All details were the same as described in section 2.1.

3.2 Hydrothermal crystallization

The autoclave was sealed and heated to a temperature of 170 °C. The temperature of 170 °C was maintained for 40 h. Thereby, the mixture in a 2.5 L autoclave was stirred at 250 rpm (revolutions/minute). After 40 hours the autoclave was cooled within a time period of - 5 hours. The suspension was then immediately treated as described in section 3.3.

3.3 Separation, drying, and calcination

After the hydrothermal crystallization, the resulting suspension had a pH of 8.9. This suspension was filtered with a porcelain suction filter with a diameter if 15 cm. The wet product was heated to a temperature of 120 °C in air within 30 min and dried at 120 °C for 240 min. The dried product was then heated to a temperature of 600 °C within 240 min and calcined in air at 600 °C for 300 min. The yield was 173 g. The powder was light beige in color.

3.4 Characterization of the product

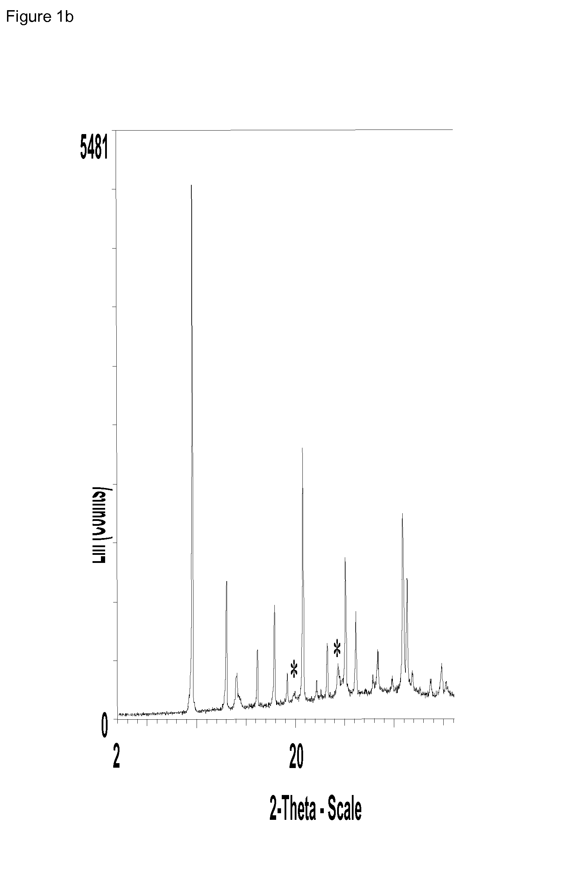

A sample of the calcined material was examined by chemical analysis, XRD, BET and Langmuir surface area, and scanning electron microscopy (SEM).
Elementary analysis showed the material to have 0.35 wt% residual C after calcination. Additionally, 1.39 g of CuO, 15.9 g of $SiO_2$, 40.67 g of $P_2O_5$, 41.5 g of $Al_2O_3$, and 0.2 g of $Na_2O$ in each case per 100 g of calcined material on a volatile-free basis. The average composition of phases can be expressed as $Cu_{0.012}Si_{0.158}Al_{0.487}P_{0.343}O_2$ (Cu in tetrahedral positions) or $Cu_{0.012}Si_{0.16}Al_{0.493}P_{0.347}O_2$ (Cu in extra-framework sites).
XRD indicated that SAPO-34 and SAPO-20 had been obtained (see Fig. 1b). It is noted that less SAPO-20 is present when compared to example 2.
The BET surface of the calcined material, determined according to DIN 66131, and the Langmuir surface area, determined according to DIN 66135, are listed in table 1.
SEM images (see figures 2b and 3b) again show the presence of 3 phases. Two copper-containing phase (-5 and -20 $\mu$m cubic crystals) and the other having no copper (~1 to 1.75 $\mu$m cubic crystals). The later are SAPO-20. It can be noted that less SAPO-20 is seen in the SEM and XRD compared with example 2.

Example 4 - 30 hour synthesis of CuSAPO-34

4.1 Reagents and suspension preparation

All details were the same as described in section 2.1.

4.2 Hydrothermal crystallization

The autoclave was sealed and heated to a temperature of 170 °C. The temperature of 170 °C was maintained for 30 h. Thereby, the mixture in a 2.5 L autoclave was stirred at 250 rpm (revolutions/minute). After 30 hours the autoclave was cooled within a time period of - 5 hours. The suspension was then immediately treated as described in section 4.3.

4.3 Separation, drying, and calcination

After the hydrothermal crystallization, the resulting suspension had a pH of 8.9. This suspension was filtered with a porcelain suction filter with a diameter if 15 cm. The wet product was heated to a temperature of 120 °C in air within 30 min and dried at 120 °C for 240 min. The dried product was then heated to a temperature of 600 °C within 240 min and calcined in air at 600 °C for 300 min. The yield was 158 g. The powder was light blue in color. Issues were encountered in selecting the correct filter size resulting in product loss. A repeat of this experiment resulted in an improved yield of 192 g or 85.7 % yield.

4.4 Characterization of the product

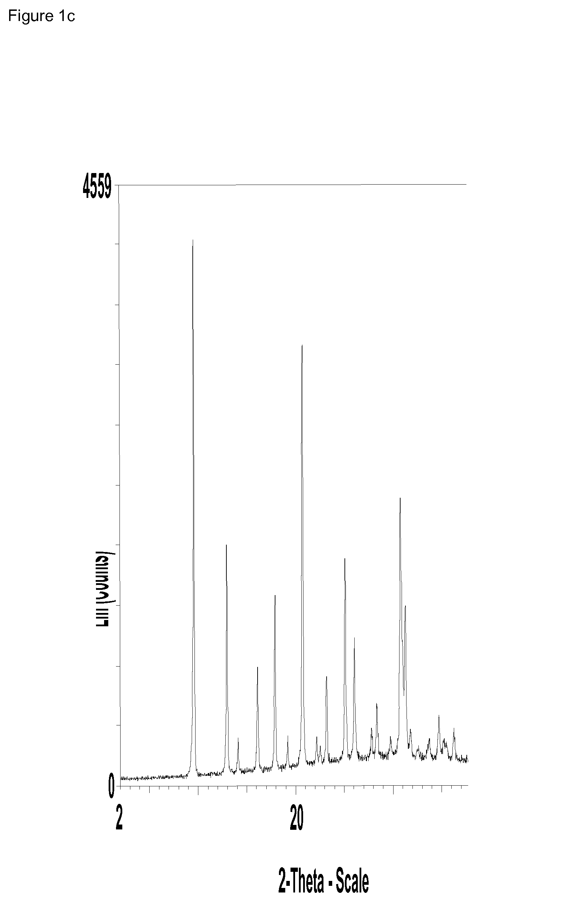

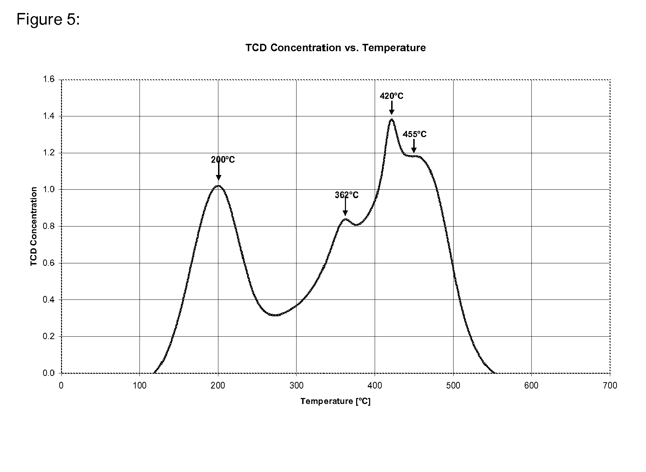

A sample of the calcined material was examined by chemical analysis, XRD, BET and Langmuir surface area, and scanning electron microscopy (SEM).
Elementary analysis showed the material to have <0.1 wt% residual C after calcination. Additionally, 1.78 g of CuO, 20.58 g of $SiO_2$, 38.09 g of $P_2O_5$, 39.47 g of $Al_2O_3$, and 0.08 g of $Na_2O$ in each case per 100 g of calcined material on a volatile-free basis. The average composition of phases can be expressed as $Cu_{0.015}Si_{0.204}Al_{0.461}P_{0.32}O_2$ (Cu in tetrahedral positions) or $Cu_{0.015}Si_{0.207}Al_{0.468}P_{0.325}O_2$ (Cu in extra-framework sites). The $NH_3$ TPD discussed below indicates that the later description is more accurate.
XRD indicated that SAPO-34 had been obtained (see Fig. 1c).
The BET surface of the calcined material, determined according to DIN 66131, and the Langmuir surface area, determined according to DIN 66135, are listed in table 1. SEM images (see figures 2c and 3c) show the presence of two major copper containing phases (-2 to 5 $\mu$m cubic crystals). Some larger 20 $\mu$m crystals are present. EDAX chemical analysis is reported in table 3. There was no indication of the non-copper containing SAPO-20 phase seen in examples 2 and 3.
$NH_3$ TPD results are shown in figure 5, indicating 4 peaks at 200, 362, 420 and 455 °C. Where the low temperature, 200 °C, peak is associated with weak acid centers, the 362 °C is associated with the presence of cationic copper in exchange sites and the higher temperatures (420 and 455 °C) to strong acid centers.

Example 5 - 20 hour synthesis of CuSAPO-34

5.1 Reagents and suspension preparation

All details were the same as described in section 2.1. The pH of the gel was modified to 7.5 by addition of nitric acid.

5.2 Hydrothermal crystallization

The autoclave was sealed and heated to a temperature of 170 °C. The temperature of 170 °C was maintained for 20 h. Thereby, the mixture in a 2.5 L autoclave was stirred at 250 rpm (revolutions/minute). After 20 hours the autoclave was cooled within a time period of - 5 hours. The suspension was then immediately treated as described in section 5.3.

5.3 Separation, drying, and calcination

After the hydrothermal crystallization, the resulting suspension had a pH of 8.5. This suspension was filtered with a porcelain suction filter with a diameter if 15 cm. The wet product was heated to a temperature of 120 °C in air within 30 min and dried at 120 °C for 240 min. The dried product was then heated to a temperature of 600 °C within 240 min and calcined in air at 600 °C for 300 min. The yield was 60.5 g. The powder was light gray in color.

### 5.4 Characterization of the product

A sample of the calcined material was examined by chemical analysis, XRD, BET and Langmuir surface area, and scanning electron microscopy (SEM).

Elementary analysis showed the material to have less than 0.1 wt% residual C after calcination. Additionally, 1.1 g of CuO, 13.28 g of $SiO_2$, 42.44 g of $P_2O_5$, 43.17 g of $Al_2O_3$, and 0.01 g of $Na_2O$ in each case per 100 g of calcined material on a volatile-free basis. The average composition of phases can be expressed as $Cu_{0.009}Si_{0.132}Al_{0.504}P_{0.355}O_2$ (Cu in tetrahedral positions) or $Cu_{0.009}Si_{0.133}Al_{0.508}P_{0.359}O_2$ (Cu in extra-framework sites).

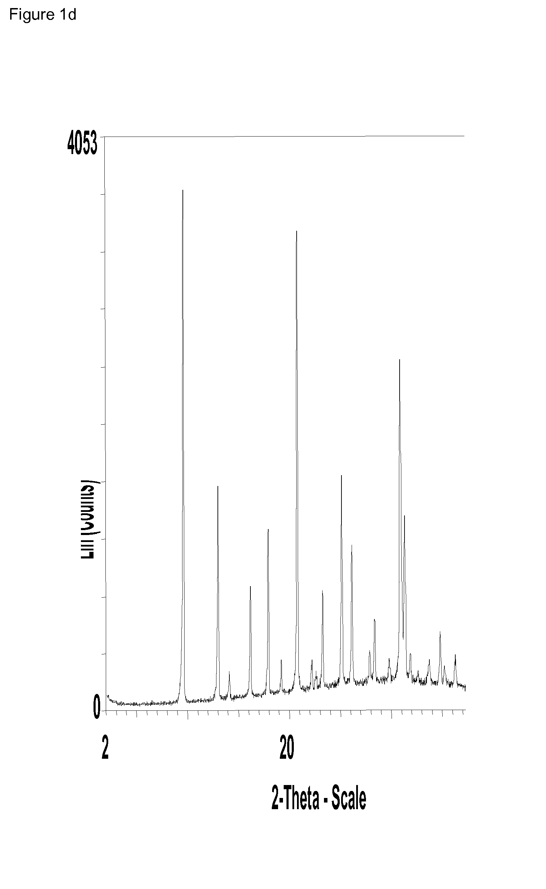

XRD indicated that SAPO-34 had been obtained (see Fig. 1d). It is noted an amorphous impurity is present.

The BET surface of the calcined material, determined according to DIN 66131, and the Langmuir surface area, determined according to DIN 66135, are listed in table 1.

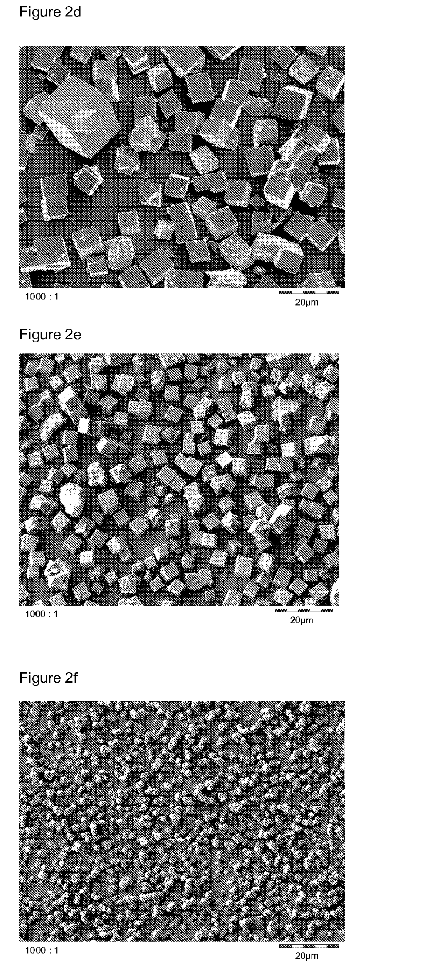

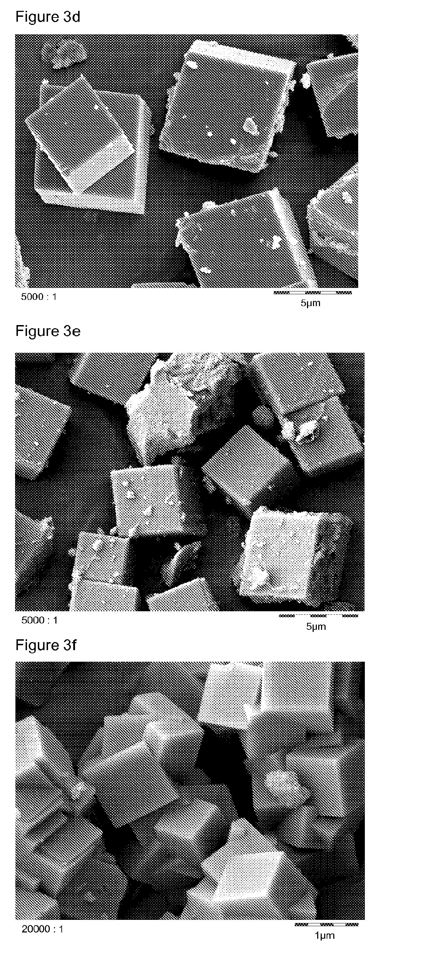

SEM images (see figures 2d and 3d) again show the presence of the two phases described in example 4.

### Example 6 - 12 hour synthesis of CuSAPO-34

#### 6.1 Reagents and suspension preparation

All details were the same as described in section 5.1.

#### 6.2 Hydrothermal crystallization

The autoclave was sealed and heated to a temperature of 170 °C. The temperature of 170 °C was maintained for 20 h. Thereby, the mixture in a 2.5 L autoclave was stirred at 250 rpm (revolutions/minute). After 20 hours the autoclave was cooled within a time period of - 5 hours. The suspension was then immediately treated as described in section 6.3.

#### 6.3 Separation, drying, and calcination

After the hydrothermal crystallization, the resulting suspension had a pH of 8.3. This suspension was filtered with a porcelain suction filter with a diameter if 15 cm. The wet product was heated to a temperature of 120 °C in air within 30 min and dried at 120 °C for 240 min. The dried product was then heated to a temperature of 600 °C within 240 min and calcined in air at 600 °C for 300 min. The yield was 29.7 g. The powder was light blue in color.

#### 6.4 Characterization of the product

A sample of the calcined material was examined by chemical analysis, XRD, BET and Langmuir surface area, and scanning electron microscopy (SEM).

Elementary analysis showed the material to have less than 0.1 wt% residual C after calcination. Additionally, 4.28 g of CuO, 13.45 g of $SiO_2$, 37.42 g of $P_2O_5$, 44.82 g of $Al_2O_3$, and 0.03 g of $Na_2O$ in each case per 100 g of calcined material on a volatile-free basis. The average composition of phases can be expressed as $Cu_{0.035}Si_{0.133}Al_{0.52}P_{0.312}O_2$ (Cu in tetrahedral positions) or $Cu_{0.036}Si_{0.137}Al_{0.539}P_{0.323}O_2$ (Cu in extra-framework sites).

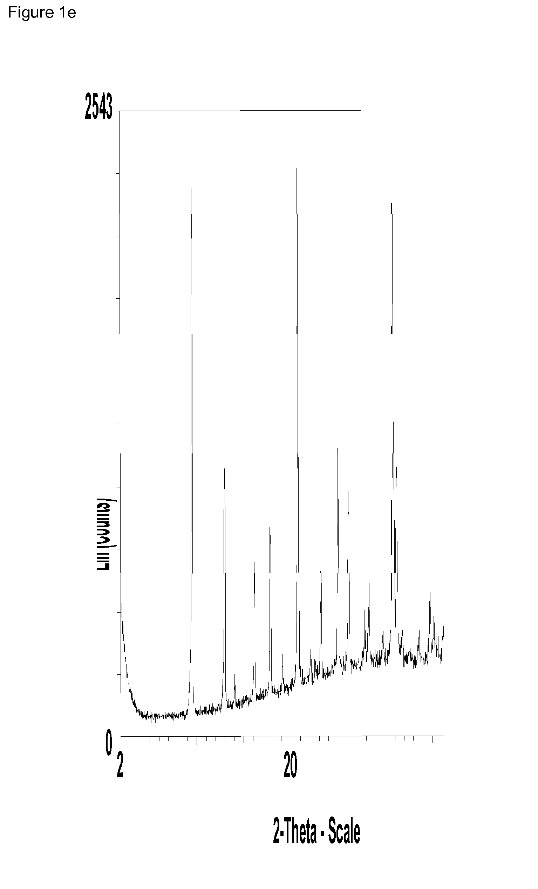

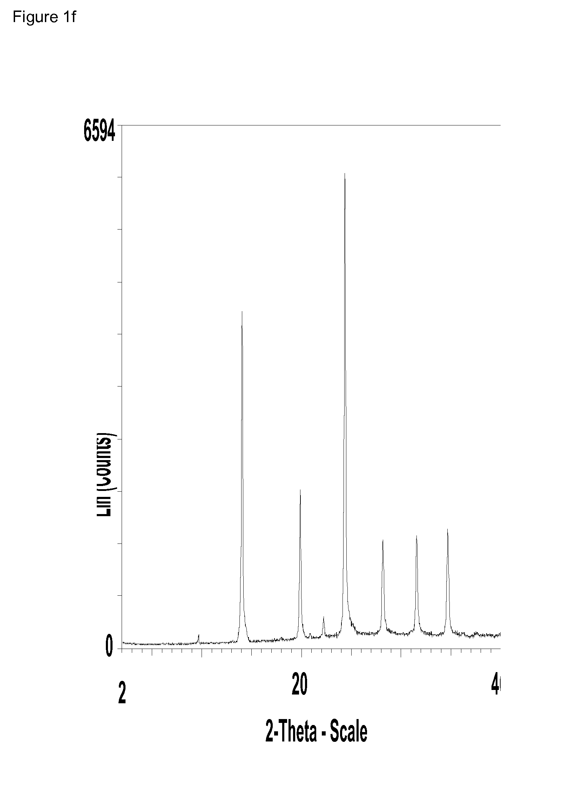

XRD indicated that SAPO-34 had been obtained (see Fig. 1 e). It is noted that a greater amount of an amorphous material is present when compared to examples 4 and 5.

The BET surface of the calcined material, determined according to DIN 66131, and the Langmuir surface area, determined according to DIN 66135, are listed in table 1.

SEM images (see figures 2e and 3e) indicate the presence of two phases as described in example 4. Additionally, an amorphous phase can be seen.

### Comparative Example 7 - SAPO-20 synthesis

#### 7.1 Reagents and suspension preparation

All reagents used were the same as described in section 2.1.

In a 3 L beaker, 924.4 g of deionized water were mixed with 139.7 g of phosphoric acid. This solution was stirred for 5 minutes at 250 rpm. This stirring was maintained throughtout the rest of the preparation of the suspension. 4.9 g of CuO was then added and complete dissolution was achieved within 2 minutes with no need for additional heating. Then 116.7 g of Pural SB Alumina were added within 5 minutes. This solution was stirred for 20 minutes at room temperature. Then, 240.8 g of Morpholine were added within 2 minutes which resulted in a rise in temperature to -58 °C. The resulting suspension was stirred for about 60 minutes during which the suspension cooled to room temperature. Subsequently, 73.4 g of Ludox AS40 were added, and the resulting suspension was stirred for about 5 minutes. The pH of the obtained suspension was 8.7.

The suspension had a composition with the following molar ratios:

0.58 $SiO_2$: 0.72 P2O5 : 1 Al2O3 : 3.26 Morpholine : 0.073 CuO : 64.9 $H_2O$.

This gel was transferred to a 2.5 L autoclave.

7.2 Hydrothermal crystallization

The autoclave was sealed and heated to a temperature of 170 °C. The temperature of 170 °C was maintained for 30 h. Thereby, the mixture in a 2.5 L autoclave was stirred at 250 rpm (revolutions/minute). After 30 hours the autoclave was cooled within a time period of - 5 hours. The suspension was then immediately treated as described in section 7.3.

7.3 Separation, drying, and calcination

After the hydrothermal crystallization, the resulting suspension had a pH of 9.3. This suspension was filtered with a porcelain suction filter with a diameter if 15 cm. The wet product was heated to a temperature of 120 °C in air within 30 min and dried at 120 °C for 240 min. The dried product was then heated to a temperature of 600 °C within 240 min and calcined in air at 600 °C for 300 min. This calcination was repeated for a total of 2 calcinations. The yield was 145 g. The powder was gray in color.

7.4 Characterization of the product

A sample of the calcined material was examined by chemical analysis, XRD, BET and Langmuir surface area, and scanning electron microscopy (SEM).

Elementary analysis showed the material to have 0.6 wt% residual C after calcination. Additionally, 0.52 g of CuO, 16.05 g of $SiO_2$, 41.55 g of $P_2O_5$, 41.12 g of $Al_2O_3$, and 0.16 g of $Na_2O$ in each case per 100 g of calcined material on a volatile-free basis. The average composition of phases can be expressed as $Cu_{0.005}Si_{0.16}Al_{0.484}P_{0.351}O_2$ (Cu in tetrahedral positions) or $Cu_{0.005}Si_{0.161}Al_{0.486}P_{0.353}O_2$ (Cu in extra-framework sites). It was noted that this SAPO-20 phase does contain Cu. This may be explained by the absence of SAPO-34 which would normally compete for the Cu in the other examples.

XRD indicated that SAPO-20 had been obtained (see Fig. 1f). A trace amount of SAPO-34 was detected.

The BET surface of the calcined material, determined according to DIN 66131, and the Langmuir surface area, determined according to DIN 66135, are listed in table 1.

SEM images (see figures 2f and 3f) indicating the presence of SAPO-20 with crystallite size of ~1 $\mu$m.

Table 1: The BET surface of the calcined materials, determined according to DIN 66131, and the Langmuir surface area, determined according to DIN 66135, for examples 2 through 7. Furthermore, calculated % yield of impurity phase, total solids and CuSAPO-34 are reported. * surface area of the amorphous phase is not known so the yield of CuSAPO-34 is only an estimate and recognized to be lower than reported. Table 1 indicates that improved yield of the target CuSAPO-34 yield is only achieved with careful control of the reaction conditions.

| Example | Reaction time (h) | BET Surface Area (m2/g) | Langmuir Surface Area (m2/g) | Impurity | Calculated SOD impurity (%) | Total Solid Yield (%) | SAPO-34 yield (%) |
|---|---|---|---|---|---|---|---|
| 2 | 72 | 364.0 | 496.7 | SAPO-20 | 37.4 | 79.5 | 49.8 |
| 3 | 40 | 459.4 | 627.5 | SAPO-20 | 20.2 | 77.2 | 61.6 |
| 4 | 30 | 579.3 | 781.7 | N/A | 0 | 70.5 | 70.5 |

(continued)

| Example | Reaction time (h) | BET Surface Area (m2/g) | Langmuir Surface Area (m2/g) | Impurity | Calculated SOD impurity (%) | Total Solid Yield (%) | SAPO-34 yield (%) |
|---|---|---|---|---|---|---|---|
| 5 | 20 | 554.8 | 761.3 | amorphous | N/A | 27.1 | 27.1* |
| 6 | 12 | 499.9 | 669.2 | amorphous | N/A | 13.3 | 13.3* |
| 7 | 30 | 13.5 | 18.6 | SAPO-20 | 100 | 68.9 | 0 |

Table 2: electron probe microanalysis of crystallites of the calcined molecular sieve synthesized according to Example 2 determined by SEM. Indicating the presence of three phases. SAPO-34 phases with a range of crystallite size from 5 to 20 μm and a SAPO-20 phase with particle size of ~1 to 1.5 μm. The SAPO-20 phase contains no Cu.

| | Electron Probe Microanalysis | | | | |
|---|---|---|---|---|---|
| | O | Al | Si | P | Cu |
| 20 μm #1 | 54.3 | 21.5 | 7.9 | 15.7 | 0.7 |
| 20 μm #2 | 60.4 | 18.6 | 7.0 | 13.4 | 0.7 |
| 20 μm #3 | 59.3 | 19.3 | 7.0 | 13.9 | 0.5 |
| average 20 μm | 58.0 | 19.8 | 7.3 | 14.3 | 0.6 |
| 5 μm #1 | 59.4 | 19.5 | 6.6 | 14.5 | 0.1 |
| 5 μm #2 | 58.2 | 19.8 | 7.3 | 14.3 | 0.3 |
| 5 μm #3 | 52.0 | 23.1 | 6.3 | 18.6 | 0.1 |
| average 5 μm | 56.5 | 20.8 | 6.7 | 15.8 | 0.2 |
| <1 μm #1 | 52.7 | 22.1 | 8.8 | 16.4 | 0.0 |
| <1 μm #2 | 61.4 | 18.1 | 7 | 13.4 | 0 |
| <1 μm #3 | 53.6 | 21.6 | 8.4 | 16.5 | 0 |
| average <1 μm | 55.9 | 20.6 | 8.1 | 15.4 | 0.0 |

Table 3: electron probe microanalysis of crystallites of the calcined molecular sieve synthesized according to Example 4 determined by SEM. Indicating the presence of two phases. SAPO-34 phases with a range of crystallite size from 2 to 5 μm. Both SAPO-34 phases contain Cu.

| | Electron Probe Microanalysis | | | | |
|---|---|---|---|---|---|
| | O | Al | Si | P | Cu |
| 5 μm | 55.1 | 21.1 | 6.9 | 15.9 | 1.0 |
| 5 μm | 57.8 | 19.8 | 6.3 | 15.1 | 1.1 |
| 5 μm | 59.4 | 19.2 | 6.1 | 14.4 | 1.0 |
| average 5 μm | 57.4 | 20.0 | 6.4 | 15.1 | 1.0 |
| 2 μm | 57.8 | 20.0 | 6.2 | 15.3 | 0.8 |
| 2 μm | 55.0 | 21.2 | 6.5 | 16.7 | 0.7 |
| 2 μm | 51.3 | 22.9 | 7.2 | 18.1 | 0.4 |
| average 2 μm | 54.7 | 21.4 | 6.6 | 16.7 | 0.6 |

Example 8 Hydrothermal aging of Examples 2 through 7

The catalyst powders of examples 2 through 7 were hydrothermally aged in the presence of 10% $H_2O$ at 850°C for 6 hours.

Example 9 Catalytic testing of Examples 1 through 7

Catalyst performance was evaluated using a microchannel catalytic reactor containing a bed of approximately 12.6 $mm^3$ of catalyst. The flow rate (standard temperature and pressure) of 500 cc/min of reactants, consisting of 500 ppm $NO_x$, 500 ppm $NH_3$, 10% $O_2$, 5% $H_2O$, balanced with He, plus 25 cc/min steam was passed over the bed at various temperatures (200, 250, 300, 350, 400 and 450 °C) to determine the reactivity of the catalyst. Conversion of $NO_x$ was determined by 100*($NO_x$ fed- $NO_x$ out)/($NO_x$ fed) using a mass spectral analyzer. This data was then normalized to allow comparison of the materials. Fresh and aged results are reported in Table 5 and compare to a CuSAPO34 prepared by the process of examples 2 through 7.

Table 4: Normalized NOx conversion at various temperatures (200, 250, 300, 350, 400 and 450 °C) to determine the reactivity of the catalyst.

Normalized NOx Conversion at

| Example | 200°C | 250°C | 300°C | 350°C | 400°C | 450°C |
|---|---|---|---|---|---|---|
| 1 - Fresh | 0.27 | 0.51 | 0.81 | 0.94 | 0.99 | 0.99 |
| 2 - Fresh | 0.27 | 0.40 | 0.65 | 0.73 | 0.67 | 0.60 |
| 2 - Aged | 0.05 | 0.25 | 0.37 | 0.48 | 0.52 | 0.51 |
| 3 - Fresh | 0.41 | 0.60 | 0.87 | 0.92 | 0.87 | 0.88 |
| 3 - Aged | 0.45 | 0.74 | 0.75 | 0.83 | 0.77 | 0.69 |
| 4 - Fresh | 0.68 | 0.90 | 0.96 | 0.92 | 1.00 | 0.83 |
| 4 - Aged | 0.55 | 0.62 | 0.78 | 0.87 | 0.81 | 0.72 |
| 5 - Fresh | 0.50 | 0.67 | 0.86 | 0.92 | 0.92 | 0.78 |
| 5 - Aged | 0.17 | 0.41 | 0.52 | 0.54 | 0.54 | 0.79 |
| 6 - Fresh | 0.74 | 0.89 | 0.91 | 0.95 | 0.98 | 0.94 |
| 6 - Aged | 0.04 | 0.42 | 0.48 | 0.51 | 0.48 | 0.52 |
| 7 - Fresh | -0.04 | -0.06 | 0.17 | -0.06 | -0.18 | -0.16 |
| 7 - Aged | -0.01 | 0.09 | 0.07 | -0.08 | -0.08 | -0.03 |

Short description of the Figures

Fig. 1a    shows the XRD pattern of the calcined molecular sieve material having CHA framework type according to Example 2. A SOD (SAPO-20) impurity is also present. The powder X-ray diffraction patterns were recorded on a Bruker AXS D4 with monochromatic Cu K alpha-1 radiation, a capillary sample holder being used in order to avoid a preferred orientation. The diffraction data were collected in the range from 2 to 50 ° (2 theta) and with a step width of 0.02°. In the figure, the angle 2 theta in ° is shown along the abscissa and the intensities (LC = Lin Counts) are plotted along the ordinate. * indicate the prominent peaks associated with the SAPO-20 phase.

Fig. 1b    shows the XRD pattern of the calcined molecular sieve material having CHA framework type according to Example 3. A SOD (SAPO-20) impurity is also present. Details of the collection of the diffraction pattern are the same as Figure 1a. * indicate the prominent peaks associated with the SAPO-20 phase.

Fig. 1c    shows the XRD pattern of the calcined molecular sieve material having CHA framework type according to Example 4. Details of the collection of the diffraction pattern are the same as Figure 1 a.

Fig. 1d    shows the XRD pattern of the calcined molecular sieve material having CHA framework type according to Example 5. Details of the collection of the diffraction pattern are the same as Figure 1 a.

Fig. 1e    shows the XRD pattern of the calcined molecular sieve material having CHA framework type according to Example 6. Details of the collection of the diffraction pattern are the same as Figure 1 a.

Fig. 1f    shows the XRD pattern of the calcined molecular sieve material having SOD (SAPO-20) framework type according to Example 7. Details of the collection of the diffraction pattern are the same as Figure 1 a.

Fig. 2a    shows crystallites of the calcined molecular sieve synthesized according to Example 2 determined by SEM (Fig. with secondary electrons 5 kV; scale: 1000:1). Indicating the presence of three phases. SAPO-34 phases with a range of crystallite size from about 5 to 20 $\mu$m and a SAPO-20 phase with particle size of about 1 to 1.5 $\mu$m.

Fig. 2b    shows crystallites of the calcined molecular sieve synthesized according to Example 3 determined by SEM (Fig. with secondary electrons 5 kV; scale: 1000:1). Indicating the presence of two phases. SAPO-34 phases with a range of crystallite size from about 5 to 20 $\mu$m and a SAPO-20 phase with particle size of about1 to 1.75 $\mu$m.

Fig. 2c    shows crystallites of the calcined molecular sieve synthesized according to Example 4 determined by SEM (Fig. with secondary electrons 5 kV; scale: 1000:1). Indicating the presence of two phases. SAPO-34 phases with a range of crystallite size from about 2 to 5 $\mu$m.

Fig. 2d    shows crystallites of the calcined molecular sieve synthesized according to Example 5 determined by SEM (Fig. with secondary electrons 5 kV; scale: 1000:1). Indicating the presence of two phases. Indicating the presence of two phases. SAPO-34 phases with a range of crystallite size from about 2 to 5 $\mu$m.

Fig. 2e    shows crystallites of the calcined molecular sieve synthesized according to Example 6 determined by SEM (Fig. with secondary electrons 5 kV; scale: 1000:1). Indicating the presence of three phases. Indicating the presence of two phases. SAPO-34 phases with a range of crystallite size from about 2 to 5 $\mu$m and an amorphous phase.

Fig. 2f    shows crystallites of the calcined molecular sieve synthesized according to Example 7 determined by SEM (Fig. with secondary electrons 5 kV; scale: 1000:1).

Fig. 3a    shows crystallites of the calcined molecular sieve synthesized according to Example 2 determined by SEM (Fig. with secondary electrons 5 kV; scale: 5000:1). Indicating the presence of three phases. SAPO-34 phases with a range of crystallite size from 5 to 20 $\mu$m and a SAPO-20 phase with particle size of about1 to 1.5 $\mu$m.

Fig. 3b    shows crystallites of the calcined molecular sieve synthesized according to Example 3 determined by SEM (Fig. with secondary electrons 5 kV; scale: 5000:1). Indicating the presence of three phases. SAPO-34 phases with a range of crystallite size from 5 to 20 $\mu$m and a SAPO-20 phase with particle size of about1 to 1.75 $\mu$m.

Fig. 3c    shows crystallites of the calcined molecular sieve synthesized according to Example 4 determined by SEM (Fig. with secondary electrons 5 kV; scale: 5000:1). Indicating the presence of two phases. SAPO-34 phases with a range of crystallite size from about 2 to 5 $\mu$m.

Fig. 3d    shows crystallites of the calcined molecular sieve synthesized according to Example 5 determined by SEM (Fig. with secondary electrons 5 kV; scale: 5000:1). Indicating the presence of two phases. SAPO-34 phases with a range of crystallite size from about 2 to 5 $\mu$m and an amorphous phase.

Fig. 3e    shows crystallites of the calcined molecular sieve synthesized according to Example 6 determined by SEM (Fig. with secondary electrons 5 kV; scale: 5000:1). Indicating the presence of three phases. A SAPO-34 phase with a range of crystallite size from about 2 to 5 $\mu$m and an amorphous phase.

Fig. 3f    shows crystallites of the calcined molecular sieve synthesized according to Example 7 determined by SEM (Fig. with secondary electrons 5 kV; scale: 20000:1). Indicating the presence of SAPO-20 with crystallite size of about1 $\mu$m.

Fig. 4    shows impact of SOD (SAPO-20) impurities on the overall surface area of mixtures of the impurity phase and the desired SAPO-34. Langmuir (solid line) and BET (dashed line) values can be used to calculate impurity content through the respective trends.

Fig. 5    NH$_3$ TPD indicating desorption at 4 peaks at 200, 362, 420 and 455 °C. Where the low temperature, 200 °C, peak is associated with weak acid centers, the 362 °C is associated with the presence of cationic copper in exchange sites and the higher temperatures (420 and 455 °C) to strong acid centers.

**Claims**

1.  A Cu containing molecular sieve as such, having framework structure SAPO-34, having a molar composition according to formula:

$$Cu_{0.007-0.125}Si_{0.01-0.25}Al_{0.44-0.54}P_{0.25-0.49}O_2$$

having an amount of impurity phase of less than 25 % and having a BET surface area of at least 400 m$^2$/g.

2.  A molecular sieve of claim 1 having a molar composition according to formula:

$$Cu_{0.016-0.083}Si_{0.032-0.17}Al_{0.44-0.54}P_{0.33-0.468}O_2.$$

3.  A molecular sieve of claim 1 or 2 having an amount of impurity phase of less than 5 %.

4.  A molecular sieve of any of claims 1 to 3 having a BET surface area of at least 550 m$^2$/g.

5.  A molecular sieve of any of claims 1 to 4 having at least four main peak maxima in the NH$_3$ TPD spectra, wherein the low temperature peak is in the range of 100 to 250, the middle temperature peak is in the range of 200 to 400, the high temperature peaks are in the range of 400 to 430 and in the range of 430 to 450 °C.

6.  Use of a molecular sieve according to any of claims 1 to 5 as catalyst for the selective reduction (SCR) of nitrogen oxides NO$_x$; for the oxidation of NH$_3$, in particular for the oxidation of NH$_3$ slip in diesel systems; for the decomposition of N$_2$O; for emission control in Advanced Emission Systems such as Homogeneous Charge Compression Ignition (HCCI) engines; as additive in fluid catalytic cracking (FCC) processes; as catalyst in organic conversion reactions; or as catalyst in "stationary source" processes, most preferably for the selective reduction of nitrogen oxides NO$_x$.

7.  An exhaust gas treatment system comprising an exhaust gas stream containing ammonia and/or urea and at least a catalyst containing a Cu containing molecular sieve having framework structure SAPO-34 according to claims 1 to 4.

8.  A method of selectively reducing nitrogen oxides NO$_x$, wherein a gaseous stream containing nitrogen oxides NO$_x$, is contacted with a Cu containing molecular sieve having framework structure SAPO-34 according to claims 1 to 4.

Figure 1a

Figure 1b

Figure 1c

Figure 1d

Figure 1e

Figure 1f

Figure 2a

1000 : 1    20µm

Figure 2b

1000 : 1    20µm

Figure 2c

1000 : 1    20µm

Figure 2d

1000 : 1                                          20μm

Figure 2e

1000 : 1                                          20μm

Figure 2f

1000 : 1                                          20μm

Figure 3a

5000 : 1                    5µm

Figure 3b

5000 : 1                    5µm

Figure 3c

5000 : 1                    5µm

Figure 3d

5000 : 1                                    5μm

Figure 3e

5000 : 1                                    5μm

Figure 3f

20000 : 1                                   1μm

Figure 4

y = -0.131x + 102.44

y = -0.1766x + 102.39

Figure 5:

TCD Concentration vs. Temperature

**EUROPEAN SEARCH REPORT**

Application Number

EP 13 17 4350

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | PALELLA B I ET AL: "On the hydrothermal stability of CuAPSO-34 microporous catalysts for N2O decomposition: a comparison with CuZSM-5", JOURNAL OF CATALYSIS, ACADEMIC PRESS, DULUTH, MN, US, vol. 217, no. 1, 1 July 2003 (2003-07-01), pages 100-106, XP002603633, ISSN: 0021-9517, DOI: 10.1016/S0021-9517(03)00033-2 [retrieved on 2003-03-29] * page 101, paragraph 2 - paragraph 6 * * page 101, right-hand column, paragraph 2.1 * ----- | 1-8 | INV. B01J20/186 B01D53/94 B01J29/072 B01J29/85 B01J35/10 C01B39/06 |
| A | MARIE-ANGE DJIEUGOUE ET AL: "Electron Spin Resonance and electron spin-echo modulation studies of synthesized NiAPSO-34 Molecular sieve and comparison with ion-exchanged NiH-SAPO-34 molecular sieve", JOURNAL OF PHYSICAL CHEMISTRY. B (ONLINE), AMERICAN CHEMICAL SOCIETY, COLUMBUS, OH, US, vol. 103, no. 5, 4 February 1999 (1999-02-04), pages 804-811, XP002603634, ISSN: 1520-5207, DOI: 10.1021/JP9823897 [retrieved on 1999-01-15] * page 805, left-hand column, lines 6-7 * ----- -/-- | 1-8 | TECHNICAL FIELDS SEARCHED (IPC) B01J C01B |

The present search report has been drawn up for all claims

| Place of search | Date of completion of the search | Examiner |
|---|---|---|
| Munich | 4 November 2013 | Werner, Håkan |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

EP 2 687 284 A1

**EUROPEAN SEARCH REPORT**

Application Number

EP 13 17 4350

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | FRACHE A ET AL: "Synthesis, spectroscopic and catalytic properties of cobalt and copper ions in aluminophosphates with chabasite-like structure. Studies of the NO reactivity", STUDIES IN SURFACE SCIENCE AND CATALYSIS, ELSEVIER B.V, NL, vol. 140, 1 January 2001 (2001-01-01), pages 269-277, XP009139596, ISSN: 0167-2991 * page 270, paragraph experimental * | 1-8 | |
| A | ELLIE L UZUNOVA ET AL: "Adsorption of NO on Cu-SAPO-34 and Co-SAPO-34: A Periodic DFT Study", JOURNAL OF PHYSICAL CHEMISTRY PART C: NANOMATERIALS AND INTERFACES, AMERICAN CHEMICAL SOCIETY, US, vol. 112, no. 7, 21 February 2008 (2008-02-21), pages 2632-2639, XP002603635, ISSN: 1932-7447, DOI: 10.1021/JP0774903 [retrieved on 2008-01-30] * the whole document * | 6-8 | |
| A | ISHIHARA T ET AL: "Copper Ion-Exchanged SAPO-34 as a Thermostable Catalyst for Selective Reduction of NO with C3H6", JOURNAL OF CATALYSIS, ACADEMIC PRESS, DULUTH, MN, US, vol. 169, no. 1, 1 July 1997 (1997-07-01), pages 93-102, XP004465547, ISSN: 0021-9517, DOI: 10.1006/JCAT.1997.1681 * the whole document * | 1-8 | TECHNICAL FIELDS SEARCHED (IPC) |

-/--

The present search report has been drawn up for all claims

| Place of search | Date of completion of the search | Examiner |
|---|---|---|
| Munich | 4 November 2013 | Werner, Håkan |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

41

| Europäisches Patentamt European Patent Office Office européen des brevets | **EUROPEAN SEARCH REPORT** | Application Number EP 13 17 4350 |
|---|---|---|

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | DEEPAK B AKOLEKAR ET AL: "FTIR investigations of the adsorption and disproportionation of NOon Cu-exchanged silicoaluminophosphate of type 34", JOURNAL OF THE CHEMICAL SOCIETY. FARADAY TRANSACTIONS, ROYAL SOCIETY OF CHEMISTRY, CAMBRIDGE, GB, vol. 94, no. 1, 1 January 1998 (1998-01-01), pages 155-160, XP002603637, ISSN: 0956-5000 * the whole document * ----- | 1-8 | |
| | | | TECHNICAL FIELDS SEARCHED (IPC) |

The present search report has been drawn up for all claims

| Place of search | Date of completion of the search | Examiner |
|---|---|---|
| Munich | 4 November 2013 | Werner, Håkan |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4440871 A
- US 5296208 A
- WO 0125151 A
- US 20080241060 A
- WO 2008132452 A
- US 4961917 A
- US 4861743 A
- US 6495724 B
- EP 1142833 A
- EP 2009056036 W
- WO 2008106519 A

**Non-patent literature cited in the description**

- **DUMITRIU et al.** *Mircoporous Materials,* 1997, vol. 10, 1-12
- **DUMITRIU et al.** *Journal de la Societe Algerienne de Chimie,* 1999, vol. 9, 215-225
- **CIOBANU et al.** *Chimie,* 1997, vol. 5, 179-184
- **KAGAKU et al.** *Japan Scientific Societies Press,* 1999
- **ISHIHARA et al.** *Studies in Surface Science and Catalysis,* 1994, vol. 84, 1493
- *Journal of Catalysis,* 1997, vol. 169, 93-102
- **DEDECEK et al.** *Collect. Czech. Chem. Commun.,* 2000, vol. 65, 343
- **PALELLA et al.** *Journal of Catalysis,* 2003, vol. 217, 100-106
- **FRACHE et al.** *Stud. Surf. Sci. Catal.,* 2001, vol. 135, 328
- **FRACHE et al.** *Stud. Surf. Sci. Catal.,* 2001, vol. 140, 269
- **FRACHE et al.** *Catalysis Today,* 2002, vol. 75, 359-365
- *Catalysis Today,* 2002, vol. 75, 359-365
- **FRACHE et al.** *Topics in Catalysis,* January 2003, vol. 22 (1/2
- **FRACHE et al.** *Studies in Surface Science and Catalysis,* 2001, vol. 140, 269 ff
- *Topics in Catalysis,* January 2003, vol. 22 (1/2
- **WANG et al.** Chinese Journal. *Journal of propulsion technology,* December 2001, vol. 22 (6), 510-513
- **WEI et al.** *Catalysis Today,* 2008, vol. 131, 262-269
- *Microporous and Mesoporous Materials,* 2006, vol. 90, 188-197
- **ASHTEKAR et al.** *J. Phys. Chem.,* 1996, vol. 100, 3665-3670
- *J. Chem. Soc. Faraday Trans.,* 1996, vol. 92 (13), 2481-2486
- **XU et al.** *Studies in Surface Science and Catalysis,* 2004, vol. 147, 445 ff